# EUROPEAN PATENT APPLICATION

(11) **EP 3 828 779 A1**
(43) Date of publication of application: **02.06.2021**
(21) Application number: 20210784.3
(22) Date of filing: 30.11.2020
(51) Int. Cl.: G06N 3/04, G06N 3/08

(54) **IMPROVED ARTIFICIAL INTELLIGENCE SYSTEM**

(30) Priority: 28.11.2019 EP 19212360
(71) Applicant: GoodAI Research s.r.o., 169 00 Praha 6 (CZ)
(72) Inventor: ROSA, Marek, 169 00 Praha 6 Praha (CZ); FEYEREISL, Jan, 169 00 Praha 6 Praha (CZ); VITKU, Jaroslav, 169 00 Praha 6 Praha (CZ); POLIAK, Martin, 169 00 Praha 6 Praha (CZ); DAVIDSON, Joseph Ray, 169 00 Praha 6 Praha (CZ); ANDERSSON, Jens Simons, 169 00 Praha 6 Praha (CZ); AFANASJEVA, Olga, 169 00 Praha 6 Praha (CZ)
(74) Representative: Finnegan Europe LLP

(57) **Abstract**

A modular Artificial Intelligence (AI) processing system is provided, comprising: an input module configured to receive input data; an output module configured to output data processed by the system; a first agent module operatively connected to the input module and to the output module, the first agent module being configured in use to process the input data and to generate the output data for the output module, and comprising two or more first sub-agent modules, each sub-agent module comprising an internal memory state and being operatively connected via a communication channel to at least one other sub-agent module within the first agent; each first sub-agent module being configured with a communication algorithm, the communication algorithm defining how the sub-agent module communicates with other sub-agent modules to enable the first agent module to process the input data, and in use at least one of the two or more first sub-agent modules is configured to process the input data in dependence on its internal memory state; and a sub-agent spawning module configured in use to generate a new sub-agent module by replicating an existing one of the first sub-agent modules, to increase a first performance metric of the system.

## Description

### TECHNICAL FIELD

The present disclosure relates to the field of artificial intelligence (AI). In particular, the present disclosure relates to a modular AI processing system configured to be scalable and to learn to solve a wide range of new tasks quickly; a method of training the modular AI processing system to learn to solve new tasks, and to learn an effective communication algorithm enabling the modular AI processing system to learn to solve new tasks quickly.

### BACKGROUND

The use and proliferation of Artificial Intelligence (AI) in disparate aspects of modern life has increased significantly in the last decade, and is recognised as one of the pre-eminent areas of current technological research. AI systems are now commonly used in mobile computing applications, in finance, for medicinal diagnostics, and in the automotive industry to name but a few commercial areas of application.

Many existing AI systems are designed and trained to perform one or more specific tasks. Typically, this is achieved by training the AI system using a training data set. Elements from the training data set are input and processed by the AI system, which generates a corresponding output. Performance of the AI system is then iteratively improved by comparing the generated output with an expected output, and varying parameters of the AI system, until the output behaviour converges with the expected behaviour.

Different types of neural networks are known to be particularly successful at solving different types of tasks. For example, Convolutional Neural Networks (CNN) are recognised as being particularly successful for image recognition, whereas Recurrent Neural Networks (RNN) are recognised as being particularly useful for speech or handwriting recognition.

A limitation of an AI system trained for a particular task, such as image recognition, is that it will struggle to adapt to a new task, for example generating accurate multimedia content recommendations for a user, based on a learned user profile. This shortcoming is, in part, due to the inherent inflexibility associated with a trained AI system to adapt to new tasks once trained. Meta-learning relates to a specific branch of AI, in which the AI algorithms are designed to determine a learning algorithm itself, and is informally often referred to as "learning to learn." Accordingly, in contrast with conventional AI algorithms, which are often conceived to resolve a specific task, a meta-learning algorithm is conceived to enable the AI system to determine the best algorithm required to learn a wider range of tasks. An objective of meta-learning AI systems is to enable the AI system to quickly learn to perform new tasks, from limited training data during deployment. It is envisaged that such systems have the potential to be significantly more flexible in terms of the gamut of different tasks that they could potentially address.

The field of meta-learning is currently still in its infancy, but is attracting much interest for improved problem-solving potential. Meta-learning currently suffers from some inherent technical difficulties, such as the problem of scalability - it is computationally significantly more demanding to train an AI system to learn a set of tasks than an individual task, as most current AI systems are configured to do. Similarly, the ability of a meta-learning AI system to continuously adapt and learn, rather than being limited to sampling from independently and identically distributed tasks, and learn from batches of data offline, is another problem requiring resolution. Another current limitation of existing meta-learning AI systems is that they can tend to overfit to sampled tasks, where there are insufficient tasks to learn from.

Accordingly, it is an object of the present invention to address at least some of the aforementioned shortcomings of the prior art AI systems.

### SUMMARY

In accordance with an aspect of the present application a modular Artificial Intelligence (AI) processing system is provided. The AI system comprises an input module configured to receive input data; an output module configured to output data processed by the system; a first agent module operatively connected to the input module and to the output module, the first agent module being configured in use to process the input data and to generate the output data for the output module. The first agent module comprises two or more first sub-agent modules, each sub-agent module comprising an internal memory state and being operatively connected via a communication channel to at least one other sub-agent module within the first agent. Each first sub-agent module may be configured with a communication algorithm, the communication algorithm defining how the sub-agent module communicates with other sub-agent modules to enable the first agent module to process the input data. In use, at least one of the two or more first sub-agent modules is configured to process the input data in dependence on its internal memory state. The modular AI processing system also comprises a sub-agent spawning module configured in use to generate a new sub-agent module, to thereby increase a first performance metric of the system. In certain embodiments, the sub-agent spawning module may be configured to generate the new sub-agent module by replicating an existing one of the first sub-agent modules.

An advantage associated with the modular architecture of the present AI processing system, is that it may be scaled with ease, in order to improve a performance metric of the system. In particular, the feature of each sub-agent module within the agent module, being configured with the communication algorithm, which defines how the sub-agent module should process input data and communicate with other sub-agent modules, means that new sub-agent modules may be incorporated within the existing agent module with ease. In this regard, the individual sub-agent modules are the basic processing units of the AI processing system. Increasing the number of sub-agent modules may increase the volume of input data that may be processed per unit time period, a speed with which the output data is generated, or an accuracy of the generated output data relative to a desired output, and accordingly the first performance metric may relate to any one of the aforementioned performance metrics. In certain embodiments the input data may comprise one or more tasks that the modular AI processing system is learning to solve. Increasing the number of sub-agent modules increases the number of tasks that the system may learn to solve per unit time. Furthermore, increasing the number of sub-agent modules, also increases any one or more of: the speed with which the AI processing system adapts to solve a new task, the speed of solving the new task, and the speed of adaptation to learning to solve the new task.

The modular architecture of the AI processing system facilitates implementation of the system on a distributed computing system. The distributed computing system may comprise a plurality of different processing devices remotely located from each other, operatively connected to form a network. In such embodiments, the different modules of the AI processing system may be located on different processing devices comprised in the distributed computing system. The processing capacity of the distributed computing system is scalable by introducing further processing devices to the network.

The sub-agent spawning module may be further configured in use to receive the output data processed by the system, and determine, using the output data, if a first threshold condition associated with the first performance metric of the system, is satisfied. If the first threshold condition is not satisfied, the sub-agent spawning module may generate the new sub-agent module, to increase the first performance metric of the system. The new sub-agent module may be comprised in the first agent module.

Generating and incorporating new sub-agent modules into an existing agent module, is further simplified when the sub-agent spawning module is configured to generate the new sub-agent by replicating an existing sub-agent.

In certain embodiments each first sub-agent module may be configured with a shared communication algorithm, and the sub-agent spawning module may be configured in use to generate the new sub-agent module comprising the shared communication algorithm, by replicating an existing one of the first sub-agent modules or creating a new one. Configuring each first sub-agent module with a shared communication algorithm, further improves the ease with which the system may be scaled, and the ease with which new sub-agent modules may be incorporated within the agent module. In particular, in certain embodiments because the sub-agent modules share the same communication algorithm, it is irrelevant which sub-agent module is replicated.

In certain embodiments the input data may comprise a plurality of component data, and the internal memory state of each one of the two or more first sub-agent modules may be configured to be dependent on data processed by the associated first sub-agent module. Furthermore, the two or more first sub-agent modules may be configured to process different component data, such that each one of the at least two or more first-sub-agent modules comprises a unique internal memory state. Additionally, the processing characteristics of each one of the at least two or more first sub-agent modules may be dependent on the unique internal memory state of each associated first sub-agent module.

Since the internal memory states of each sub-agent are dependent on the data that the sub-agent has processed, ensuring that different sub-agents process different data ensures that different sub-agent modules acquire unique internal memory states, which in turn ensures that the processing behaviour of the different sub-agent modules is also unique. The unique behaviour of the plurality of sub-agents ensures that the processing required to solve the task associated with the input data, is distributed throughout the plurality of sub-agent modules, resulting in a more efficient use of system resources, when compared to a scenario in which each sub-agent module independently attempts to solve the task associated with the input data. In other words, it ensures collaborative and distributive problem solving between the plurality of sub-agent modules. The process of enabling the plurality of different sub-agent modules to acquire unique processing behaviour, is referred to as the introduction of diversification into the system. The use of a shared communication algorithm, whilst facilitating the scalability of the system, increases the risk that the sub-agent modules do not exhibit unique processing behaviour, and do not attempt to solve the task associated with the input data in a collaborative distributed manner. The introduction of diversification mitigates this risk.

There are different ways in which diversification may be achieved. For example, in some embodiments at least some of the first sub-agent modules may be configured with a different communication algorithm, and the number of different communication algorithms may be less than the number of first sub-agent modules, and the processing characteristics of each first sub-agent module may be dependent on the associated communication algorithm. Configuring different sub-agent modules with different communication algorithms ensures that their processing behaviour differs, thus again helping to ensure distributive problem solving across the plurality of sub-agents. The advantage of restricting the number of different communication algorithms to being less than the number of different sub-agent modules is that this helps to ensure that the process of learning to solve new tasks requires the interaction of different sub-agent modules. Thus, ensuring collaborative problem solving amongst the plurality of first sub-agent modules.

Further ways of introducing diversification into the plurality of first sub-agent modules, in accordance with embodiments of the application, may comprise inputting different input data to different first sub-agent modules. Similarly, diversification may be introduced by configuring the communication channels operatively connecting the plurality of different first sub-agent modules, to ensure that at least some of the first sub-agent modules do not process the same data as the other first sub-agent modules. This may be undertaken when first configuring the first sub-agent modules during initialisation. Similarly, configuring at least two of the first sub-agent modules with different initial internal memory states, also achieves diversification.

In accordance with some embodiments, the two or more first sub-agent modules may be configured to form a network of sub-agent modules, wherein the two or more first sub-agent modules are configured in operative communication. The two or more networked first sub-agent modules may be configured in use to iteratively process the input data, by exchanging data until a second threshold condition is achieved, wherein the internal memory state of at least one of the first sub-agent modules comprised in the network of sub-agent modules, may be configured to change as the input data is processed. The network of sub-agent modules may be configured to generate the output data in dependence on the second threshold condition being achieved. This networked configuration of sub-agent modules ensures that different sub-agent modules process different data. Furthermore, iteratively processing the data may help the system to converge to a desired solution. Accordingly, in certain embodiments the second threshold condition may comprise the plurality of sub-agents collectively converging to a solution. In certain embodiments the second threshold condition may comprise a predetermined number of processing iterations being completed. For example, this might comprise at least one processing iteration being completed. Equally this might comprise at least two or more processing iterations being completed.

The AI processing system may comprise a sub-agent verification module operatively connected to the input module and to the output module. The sub-agent verification module may be configured in use to analyse the generated output data, and to determine if the generated output data satisfies a third threshold condition, and in dependence on the output data not satisfying the third threshold condition, instructing the first agent module to iteratively process the input data until the generated output data satisfies the third threshold condition. The third threshold condition may be associated with a performance metric of the system. The sub-agent verification module, advantageously, assists the AI processing system with learning to solve tasks associated with the input data, by determining if the generated output satisfies the third threshold condition, and ensuring that further iterative processing cycles are carried out by the sub-agent modules, until the generated output satisfies the third threshold condition. When the third threshold condition is associated with a performance metric of the system, then the sub-agent verification module assists the plurality of sub-agent modules with determining how well they are solving the task associated with the input data. In certain embodiments, the sub-agent verification module may further be configured to provide qualitative feedback to the sub-agent modules in the form of a reward and/or loss analysis, which in turn, may be used by the plurality of sub-agent modules to improve the solution to the task being solved. In certain embodiments the sub-agent verification module may also be directly connected to the agent module to improve and/or facilitate analysis of one or more performance metrics of the system.

In certain embodiments the sub-agent verification module may be configured to determine if the generated output data is at or within a predetermined proximity of an expected output data.

In certain embodiments, performance of the sub-agent modules in solving the task associated with the input data, may be achieved by at least one of the first sub-agent modules being configured in use to vary, during the iterative processing of the input data, any one or more of: a) an internal memory state of the at least one first sub-agent module; b) a communication channel operatively connecting the at least one first sub-agent module to another first sub-agent module; or c) data shared across the communication channel operatively connecting the at least one first sub-agent module to another first sub-agent module.

In accordance with certain embodiments, the modular AI processing system comprises an agent spawning module configured in use to generate a second agent module in operative communication with the first agent module, by replicating the first agent module or generating a new agent module, the second agent module comprising two or more second sub-agent modules. The agent spawning module may be configured to receive the output data, and to determine, using the output data, if a fourth threshold condition associated with a desired performance metric of the system is satisfied. If the fourth threshold condition is not satisfied, then the agent spawning module may generate the second agent module, to increase the desired performance metric of the system. The agent spawning module effectively operates in a similar manner to the sub-agent spawning module, and provides similar advantages to the sub-agent spawning module in terms of increasing performance metrics of the system. Furthermore, in accordance with some embodiments, the first and second agent modules may be configured in accordance with any topology. For example, the first and second agent modules may be configured in parallel in order to process input data in parallel, thereby providing the benefits of parallel processing.

The agent spawning module may be configured in use to generate the two or more second sub-agent modules comprised in the second agent, by replicating at least one of the two or more first sub-agent modules.

In accordance with certain embodiments, at least one of the first sub-agent modules comprises a neural network comprising a variable memory state, wherein the data processing characteristics of the neural network are dependent on the variable memory state. The neural network may comprise a recurrent neural network, or an Elman recurrent neural network.

The first performance metric may comprise any one or more of: a speed with which the output data is generated; a volume of input data that the AI processing system is capable of processing in a unit time period; an accuracy of the generated output data relative to a desired output; a convergence of the generated output to a desired output; a computational capacity of the system; or an available memory of the system.

In accordance with some embodiments any one or more of the first, second, third and fourth threshold conditions may relate to the same threshold condition, or to different threshold conditions. For example, in certain embodiments the sub-agent spawning module and the agent spawning module may adopt the same threshold condition, in which case the first and fourth threshold conditions relate to the same threshold condition.

Any one or more of the threshold conditions may relate to a predetermined threshold condition. Similarly, any one or more of the threshold conditions may relate to a dynamic threshold condition. The dynamic threshold condition may change during subsequent processing iterations. The dynamic threshold condition may be learned by the AI processing system during subsequent processing iterations. For example, as a form of recursive self-improvement.

In accordance with a further aspect of the present application, an iterative method of training the above described modular AI processing system is provided. The iterative method comprises a first training stage and a second training stage. The first stage comprises an iterative cycle in which input data associated with one or more tasks to be solved, are processed by the system, until a first performance metric is satisfied. Each iterative cycle within the first stage comprises updating the internal memory state of the at least one of the first sub-agent modules, to vary the generated output for the given cycle. This is repeated until the generated output satisfies the second threshold condition. The second stage comprises analysing the generated output satisfying the second threshold condition, and determining if the generated output satisfies a third threshold condition. If the third threshold condition is not satisfied, then parameters associated with the communication algorithm configured on the two or more first sub-agent modules are amended, and the first and second training stages are repeated by the first sub-agent modules configured with the modified communication algorithm, until the second and third threshold conditions are satisfied. In accordance with embodiments, the second threshold condition may be associated with a metric assessing the qualitative accuracy of the generated output data, whilst the third threshold condition is associated with a metric assessing a performance of the adopted communication algorithm, in enabling the modular AI processing system to learn to solve the one or more tasks associated with the input data. In this way, advantageously the second training stage enables the modular AI processing system to determine the most effective communication algorithm to employ to solve the one or more tasks associated with the input data.

Once the modular AI processing system has been trained and the most effective communication algorithm determined, the communication algorithm may be fixed, and the AI system deployed. The system is still able to learn recursively using the first training stage. In other words, the deployed modular AI processing system is configured to learn to solve new tasks by drawing upon previously learned knowledge, using the steps comprised in the first training stage.

The modular architecture of the AI processing system in combination with the aforementioned method of training allows for easier determination of the communication algorithm, compared to prior art meta-learning systems, due to a regularizing effect on the policy search space, i.e. the different sub-agent modules impose a structure that is more constrained, and hence the communication algorithm search space becomes smaller, and a good communication algorithm can be found faster.

The modular architecture of the AI processing system enables the system to resolve an existing shortcoming associated with most prior art AI processing systems, regarding learning new knowledge - namely, the issue of catastrophic interference or forgetting. In the prior art, when new knowledge is encountered and needs to be learned, rather than retaining previously learned knowledge, prior art AI systems often overwrite and forget the previously learned knowledge. The modular architecture of the present AI processing system, resolves this shortcoming in the prior art, by enabling new knowledge to be acquired in newly generated sub-agent modules, without overwriting or otherwise discarding previously learned knowledge acquired by other existing sub-agent modules. The generating of new sub-agent modules, may be determined automatically based on the processing capacity of the agent module. Performance metrics associated with the quality of the solution generated for solving a new task, associated with learning new knowledge, may also be used to determine if new sub-agent modules need to be generated.

The modular architecture of the AI processing system allows for improved interpretability and understanding of the AI processing system by a human operator. Most known prior art AI processing systems are based on large, monolithic integrated architectures that are difficult for a human operator to interpret. Furthermore, once deployed, the operation of such systems becomes even more difficult to understand. The modular architecture of the present system allows for a clearer delineation and separation of functionality into respective modules, and therefore a better understanding of each functional compartment is achievable. This also allows for better validation and verification, for example for safety-critical applications, as smaller modules are easier to validate than large monolithic processing units.

In accordance with yet a further aspect of the application, a method of training a modular Artificial Intelligence, AI, processing system to determine an improved communication algorithm is provided. The modular AI processing system comprising an agent module, the agent module comprising two or more sub-agent modules, each sub-agent module comprising an internal memory state and being configured with a communication algorithm, the communication algorithm defining how the sub-agent module communicates with other sub-agent modules to learn to solve an input task. The method may comprise the steps of: processing, by at least one of the two or more sub-agent modules, the input task, and updating the internal memory state of each sub-agent module processing the input task; generating, by the agent module, output data based on the processing of the input task; analysing the generated output data, by a sub-agent verification module, to determine if the generated output data satisfies a predetermined first threshold condition, and repeating the processing and generating steps, until the generated output data satisfies the predetermined first threshold condition; analysing, by a communication algorithm update module, a performance metric, the performance metric being indicative of a performance of the communication algorithm in enabling the two or more sub-agent modules to solve the input task; updating, by the communication algorithm update module, at least one parameter associated with the communication algorithm if the performance metric does not satisfy a second predetermined threshold condition; and determining the improved communication algorithm by iteratively repeating the steps comprised in the method, until the performance metric satisfies the second predetermined threshold condition.

In certain embodiments the predetermined first threshold condition may be indicative of a proximity of the generated output to an expected output.

The performance metric may comprise a time taken by the agent module to generate output data satisfying the predetermined first threshold condition, and the second predetermined threshold condition may comprise a threshold time limit. This enables the system to determine an improved communication algorithm that enables the AI system to learn to solve new tasks quickly.

An advantage associated with the herein disclosed training method, is that it enables a single improved communication algorithm to be determined, which is functionally easier to do, compared to finding multiple different communication algorithms. Furthermore, by restricting the method to determining a single communication algorithm that is shared between the different sub-agent modules, helps to determine a more universally valid communication algorithm that may be used to solve a wider range of different tasks. This also helps to ensure that the determined communication algorithm is less task-specific.

Another aspect of the application relates to a method of training an Artificial Intelligence, AI, processing system to learn an improved communication algorithm for learning how to solve one or more tasks. The AI processing system may comprise at least one first agent module operatively connected to an input module for receiving input data, and to an output module configured to output data processed by the system. The at least one first agent module may comprise two or more first sub-agent modules, each first sub-agent module being operatively connected to at least one other first sub-agent module within the first agent module, and each sub-agent module being configured to execute a communication algorithm defining how each sub-agent module communicates with other sub-agent modules comprised within the at least one first agent module, when processing input data associated with the one or more tasks. The method may comprise the steps of: receiving by the input module, input data associated with the one or more tasks that the AI processing system is learning to solve; iteratively processing, by the two or more first sub-agent modules, during a first iterative process, the input data in accordance with the communication algorithm and generating during each iteration output data; analysing the output data generated during each iteration of the first iterative process and providing to the first agent module, a structured feedback dependent on the output data generated during each iteration, the structured feedback comprising information enabling at least one parameter associated with at least one sub-agent module to be modified during subsequent iterations of the first iterative process; repeating the first iterative process until a first threshold condition is achieved; determining if the communication algorithm satisfies a second threshold condition; modifying the communication algorithm executed by each sub-agent module if the second threshold condition is not satisfied; and iteratively repeating the method steps until the communication algorithm satisfies the second threshold condition. The training method comprises two iterative processes. The first iterative process is referred to in the ensuing description of embodiments, as the inner training loop. The second iterative process comprising iteratively repeating the method steps until the communication algorithm satisfies the second threshold condition is referred to in the ensuing description of embodiments, as the outer training loop. The present aspect benefits from the same advantages as recited in respect of the preceding aspects and embodiments.

The first threshold condition may comprise a predetermined number of processing iterations being completed. The step of iteratively processing, by the two or more first sub-agent modules, during the first iterative process may comprise: exchanging data between the two or more first sub-agent modules until the predetermined number of processing iterations is completed. An internal memory state of at least one of the two or more first sub-agent modules may change with respect to the memory state of the at least one first sub-agent module during a preceding processing iteration, as the input data is iteratively processed by the two or more first sub-agent modules.

The first threshold condition may comprise a convergence condition indicative of whether an output of the two or more first sub-agent modules converges to a solution. The step of iteratively processing, by the two or more first sub-agent modules, during the first iterative process, may comprise: exchanging data processed by the two or more first sub-agent modules until a convergence in the output generated by the two or more first sub-agent modules in subsequent processing iterations of the first iterative process is observed. An internal memory state of at least one of the two or more first sub-agent modules may change with respect to the memory state of the at least one first sub-agent module during a preceding processing iteration, as the input data is processed by the two or more first sub-agent modules, the preceding processing iteration being comprised in the first iterative process.

In certain embodiments, modifying the at least one parameter causes a modification of any one or more of: a) an internal memory state of at least one of the two or more first sub-agent modules; b) a communication channel operatively connecting the two or more first sub-agent modules; or c) data shared across a communication channel operatively connecting the two or more first sub-agent modules.

In certain embodiments, the second threshold condition may comprise a predetermined time period taken by the two or more first sub-agent modules to generate output data that solves the one or more tasks. The step of determining if the communication algorithm satisfies the second threshold condition may comprise: determining if the time taken by the two or more first sub-agent modules to generate the output data that solves the one or more tasks is less than or equal to the predetermined time period.

In certain embodiments the second threshold condition may comprise any one or more of: a) a convergence to a common solution in the output generated by the at least one first agent module over subsequent iterations of the method; b) a convergence to an expected solution in the output generated by the at least one first agent module over subsequent iterations of the method ; or c) a speed with which the output generated over subsequent iterations of the method converges.

The communication algorithm may comprise at least one variable parameter. Modifying the communication algorithm executed by each sub-agent module if the second threshold condition is not satisfied, may comprise: varying a value of the at least one variable parameter using any one or more of a stochastic gradient descent, an evolutionary method, or an iterative optimization method.

The structured feedback may comprise a quantified measure of a proximity of the generated output to an expected output. This helps to provide for recursive self-improvement over different processing iterations. The structured feedback may comprise any one or more of: a reward; a loss; or a classification loss. In some embodiments the reward may comprise a reward value. The structured feedback may be indicative of a direction in which the output data generated during subsequent iterations of the first iterative process is evolving with respect to the instantaneous as well as long-term desired or expected operation or output of the system. The structured feedback may be comprised in the input to the agent module in subsequent processing iterations of the first iterative process. The structured feedback may also comprise data that contains structure of information indicative of the system's expected behaviour in relation to its current state.

In accordance with some embodiments, the structured feedback may be received from a source external to the AI processing system.

The communication algorithm may comprise at least one variable parameter, and the method may further comprise: fixing the at least one variable parameter to prevent it being changed, if it is determined that the communication algorithm satisfies the second threshold condition. In this way, once a communication algorithm that satisfies the second threshold condition has been obtained, the algorithm may be fixed and prevented from further manipulation. The AI system is now trained, and may be deployed to solve different tasks. Once deployed, parameters specific to the operation of individual sub-agent modules are still variable, but the communication algorithm the sub-agent modules are configured with are fixed.

The method may further comprise determining, using the output data, if a third threshold condition associated with a desired performance metric of the system is satisfied. A new sub-agent module may be generated if the third threshold condition is not satisfied. The desired performance metric may comprise any one or more of: a speed with which the output data is generated; a volume of input data that the AI processing system is capable of processing in a unit time period; an accuracy of the generated output relative to a desired output; a convergence of the generated output to a desired output; a computational capacity of the AI processing system; or an available memory of the AI processing system.

In accordance with some embodiments, generating the new sub-agent may comprise replicating at least one of the two or more first sub-agent modules.

The third threshold condition is the same condition as any one of: the first threshold condition, or the second threshold condition.

In certain embodiments the first threshold condition and the second threshold condition are the same threshold condition. The first threshold condition or the second threshold condition may be: a predetermined threshold condition; or a dynamic threshold condition that changes during subsequent iterative cycles of the method steps.

A further advantage associated with the method of training the modular AI processing system of the present disclosure, is that it enables open-ended divergent learning. The modular nature of the AI system combined with the ability to recursively self-improve allows for learning to solve tasks in the first iterative process (the inner loop) that are beyond what the agent experiences during its lifetime. This is achieved by a performance metric that is convergent in the ability to solve more tasks, but divergent in the learning process that is represented by the communication algorithm in conjunction with the one or more sub-agents' internal memory.

A further aspect of the application relates to a computer readable medium storing instructions executable by one or more processors to carry out any one of the aforementioned methods.

Yet a further aspect of the application relates to a computer program product comprising instructions which, when the program is executed by one or more computer processors, cause the one or more processors to carry out any one of the aforementioned methods.

Aspects of the present disclosure provide for an improved AI system, which is not task specific, but is instead capable of learning to solve any new task presented to it.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Within the scope of the present application any reference to a module may be implemented in software and/or in hardware, and any reference to a module is intended to be construed as a software module and/or as a hardware module.

### BRIEF DESCRIPTION OF THE DRAWINGS

Embodiments of the invention will now be described with reference to the accompanying drawings, in which:
**Figure 1** is a schematic system diagram of an exemplary AI system, in accordance with an embodiment;
**Figure 2** is a schematic diagram illustrating the internal architecture of the agent of

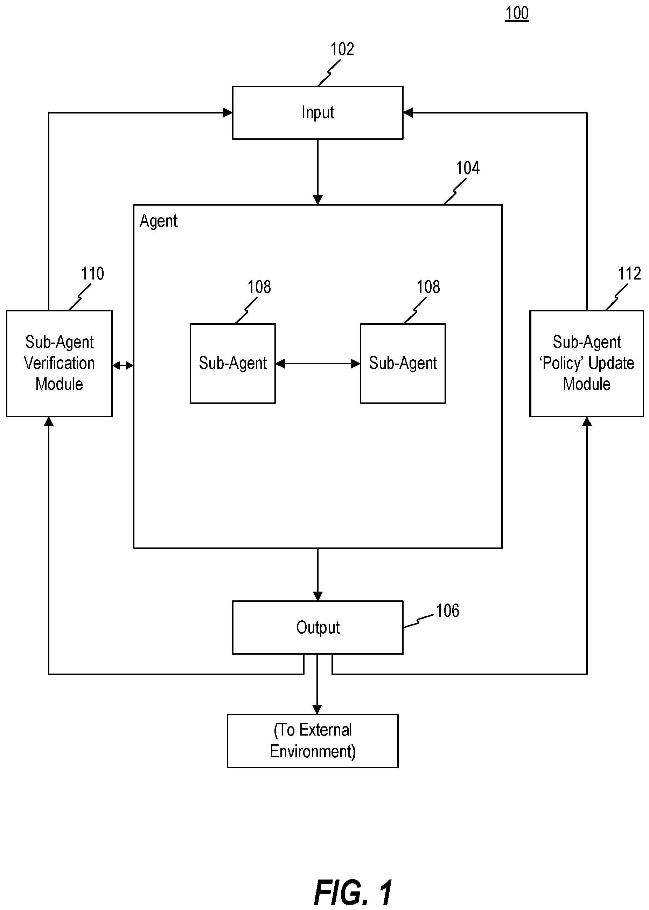

Figure 1 comprising a plurality of sub-agents;

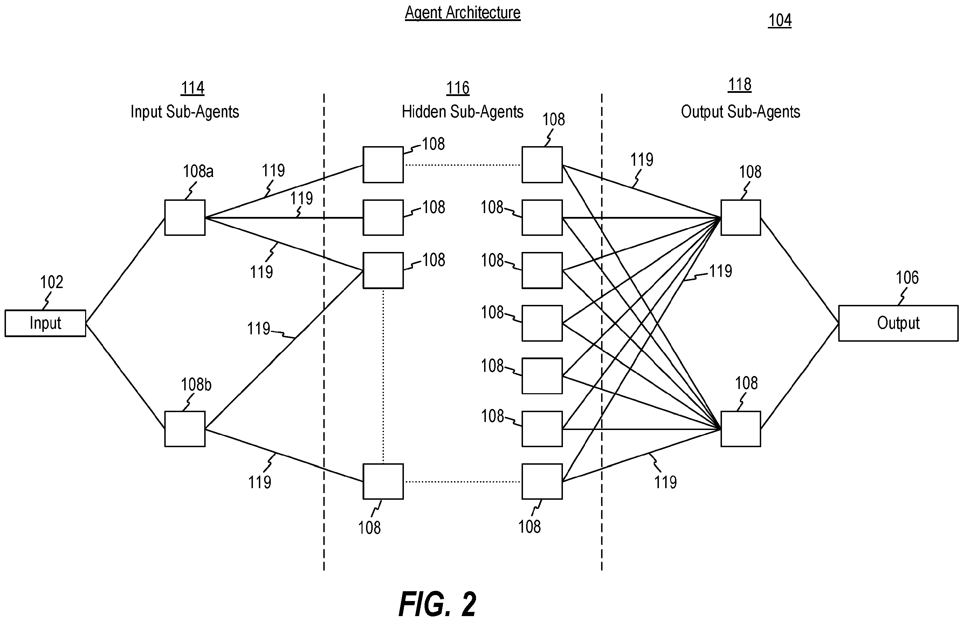

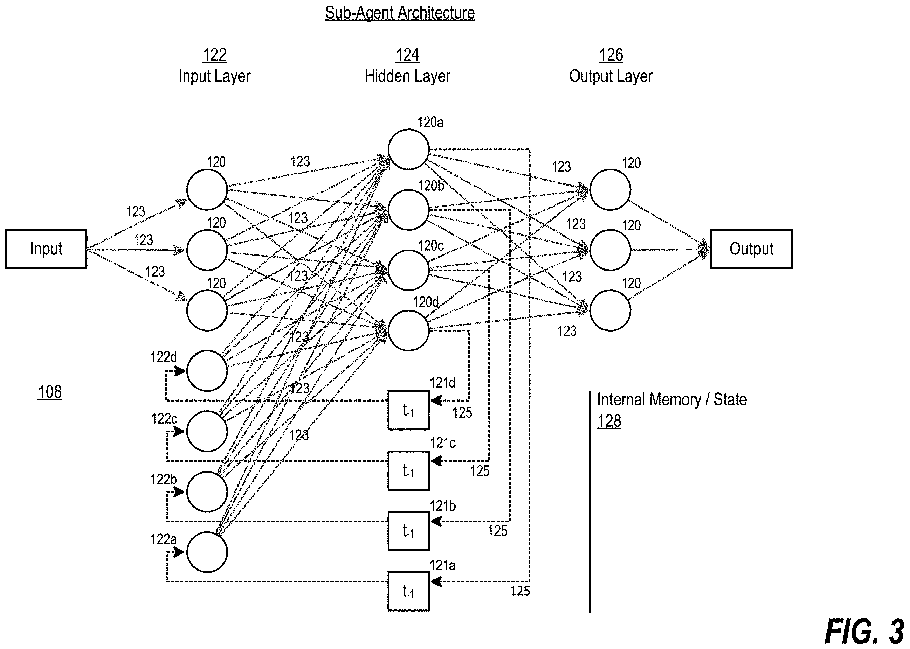

**Figure 3** is a schematic diagram illustrating the internal architecture of a sub-agent comprised in Figure 2, in accordance with an embodiment in which the sub-agent comprises a neural network;

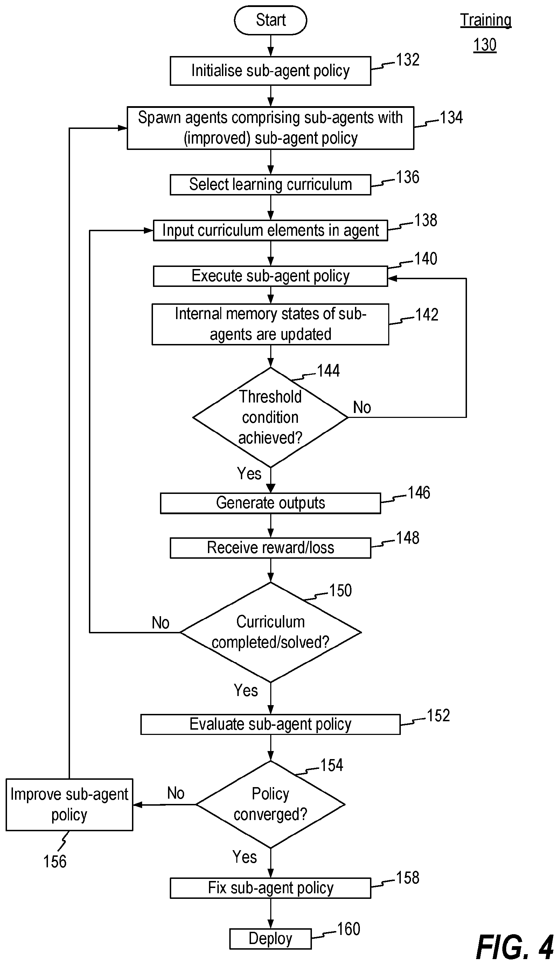

**Figure 4** is a process flow chart illustrating a method for training the AI system of Figure 1, comprising of an 'inner' and an 'outer' training cycle;

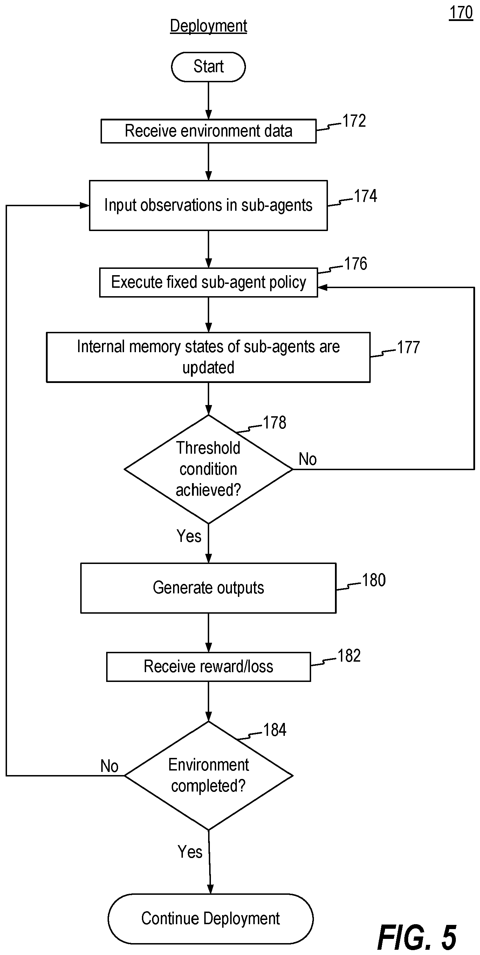

**Figure 5** is a process flow chart illustrating how the trained AI system of Figure 4 may continue to learn when deployed in an environment;

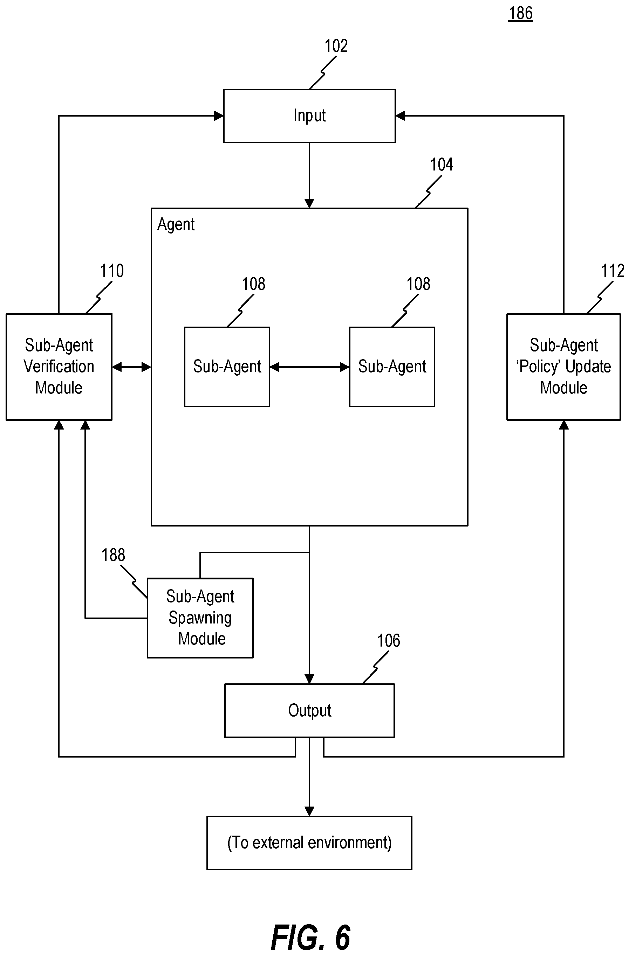

**Figure 6** is a schematic system diagram of an exemplary AI system configured to spawn new sub-agents, in accordance with an embodiment;

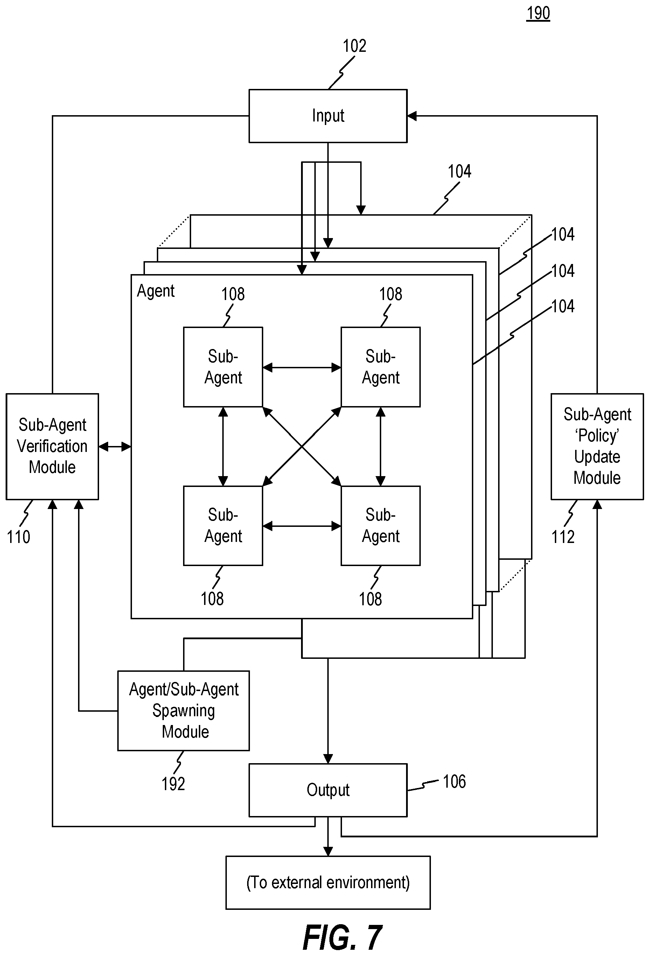

**Figure 7** is a schematic system diagram of an AI system comprising a plurality of agent modules, and is configured to spawn new agents and/or sub-agents, in accordance with an embodiment; and

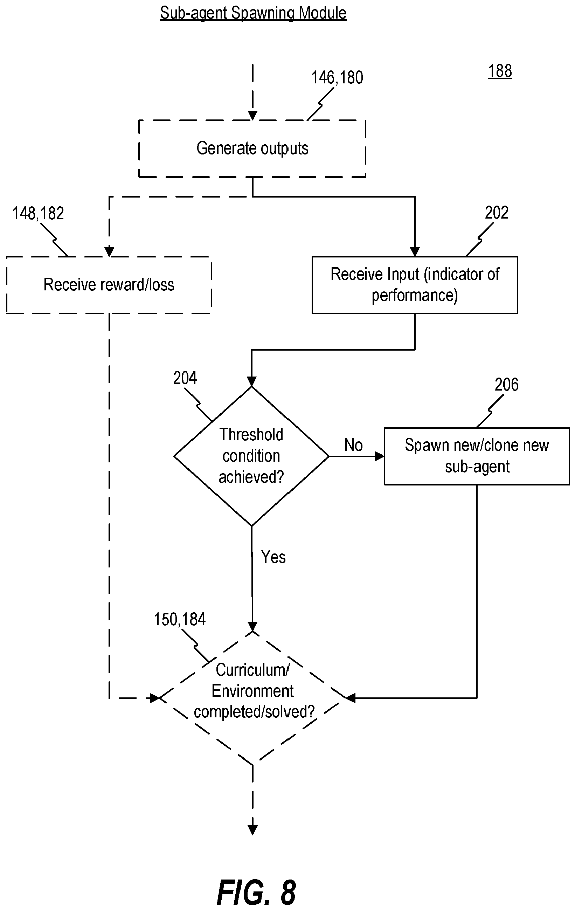

**Figure 8** is a process flow chart illustrating how a sub-agent spawning module determines whether to spawn a new sub-agent, in accordance with the embodiment of Figures 6 or 7.

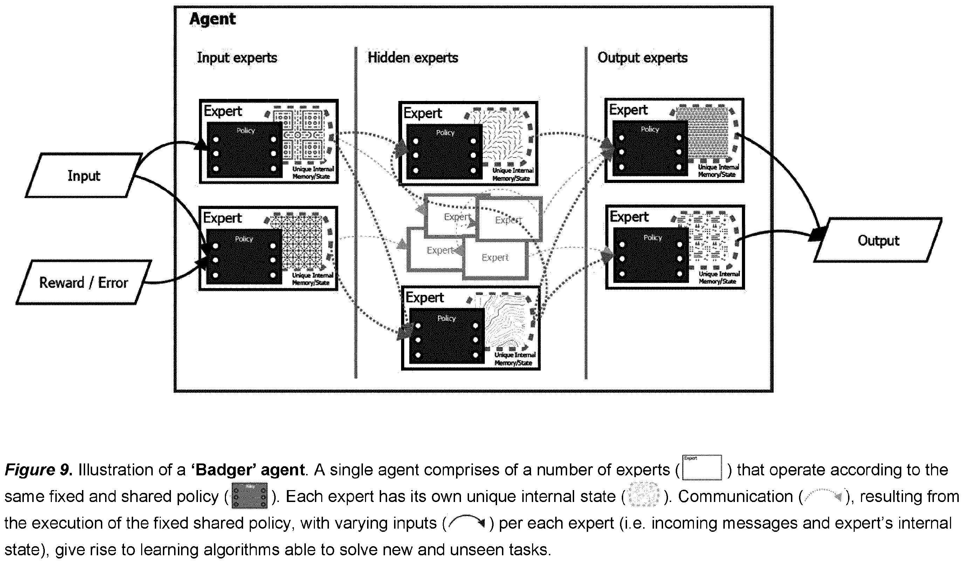

Figures 9 to 18 relate to the figures referenced in the Annex of the specific description, in which:
   **Figure 9** is a schematic illustration of the "Badger" agent in accordance with an embodiment;

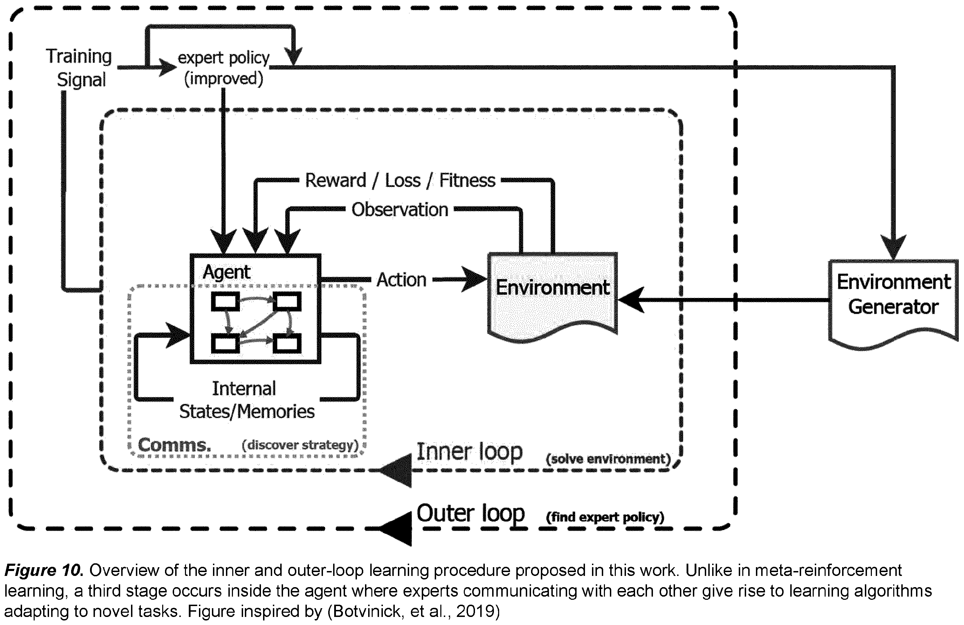

**Figure 10** is a schematic illustration of an example of the inner and outer loop, in accordance with an embodiment;

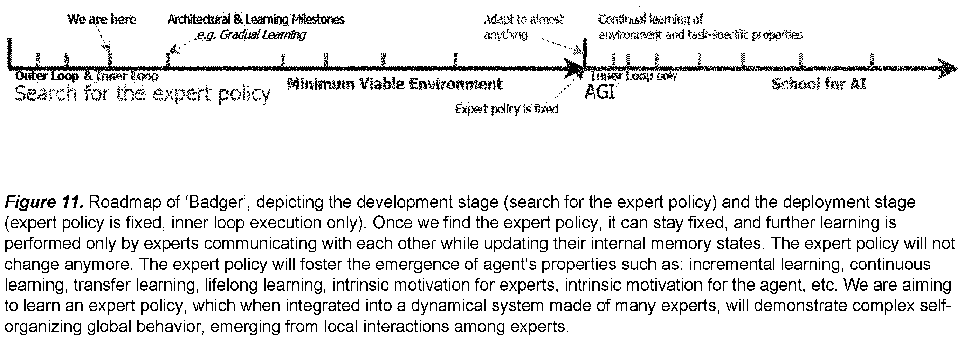

**Figure 11** is a development road map schematic of the "Badger" agent, in accordance with an embodiment;

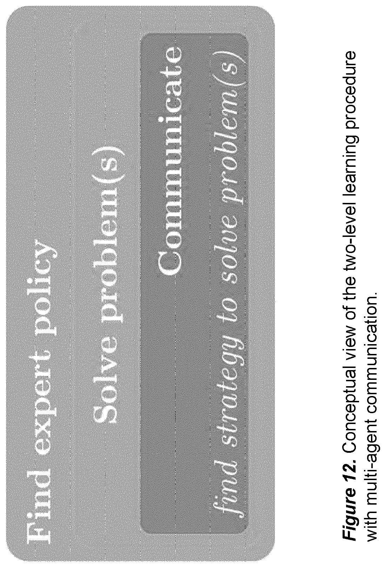

**Figure 12** is a conceptual schematic of the inner and outer loop;

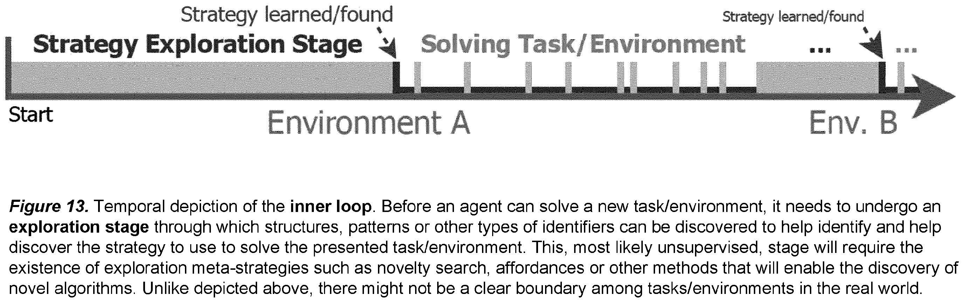

**Figure 13** is a temporal depiction of the inner loop, in accordance with an embodiment;

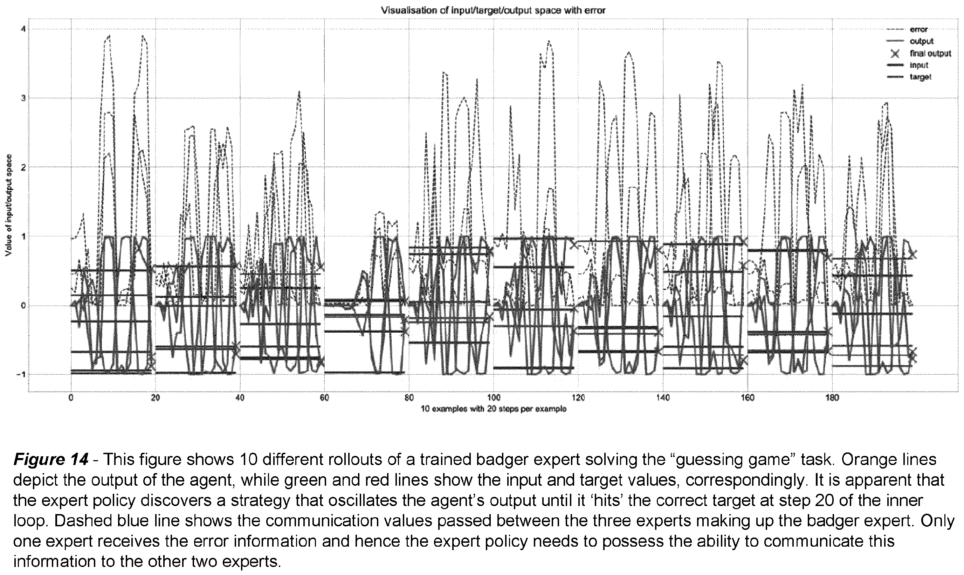

**Figure 14** is a graph illustrating experimental results obtained with the "Badger" agent;

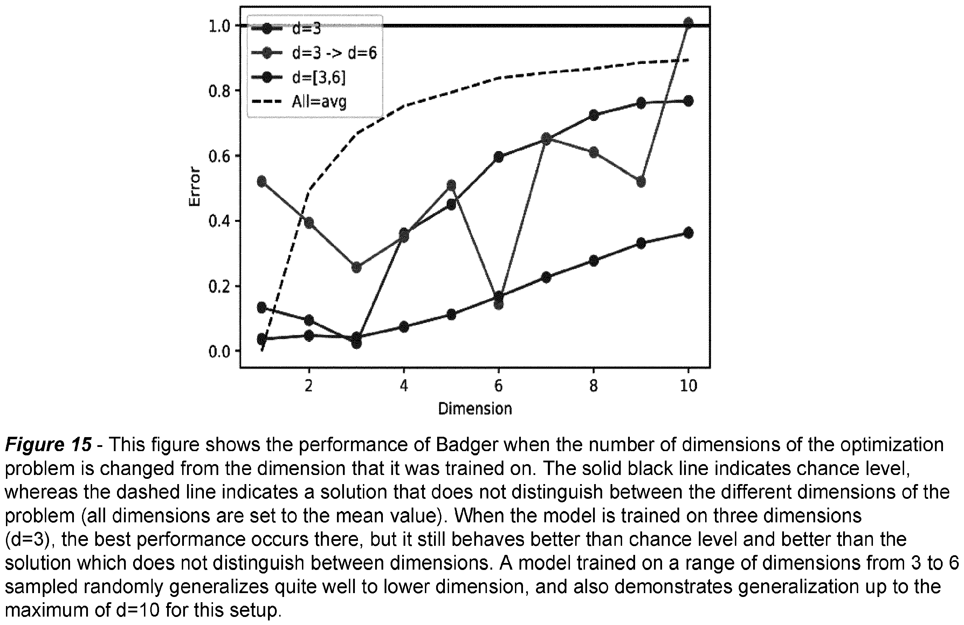

**Figure 15** is a graph illustrating further experimental results obtained with the "Badger" agent applied to the optimization game;

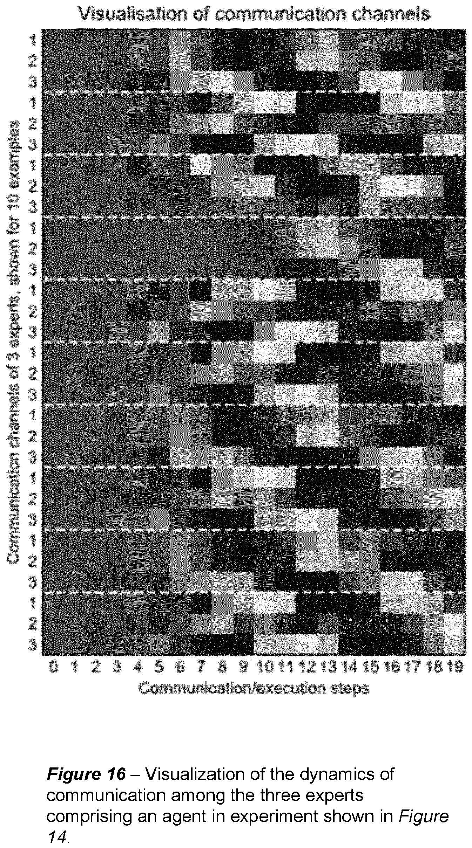

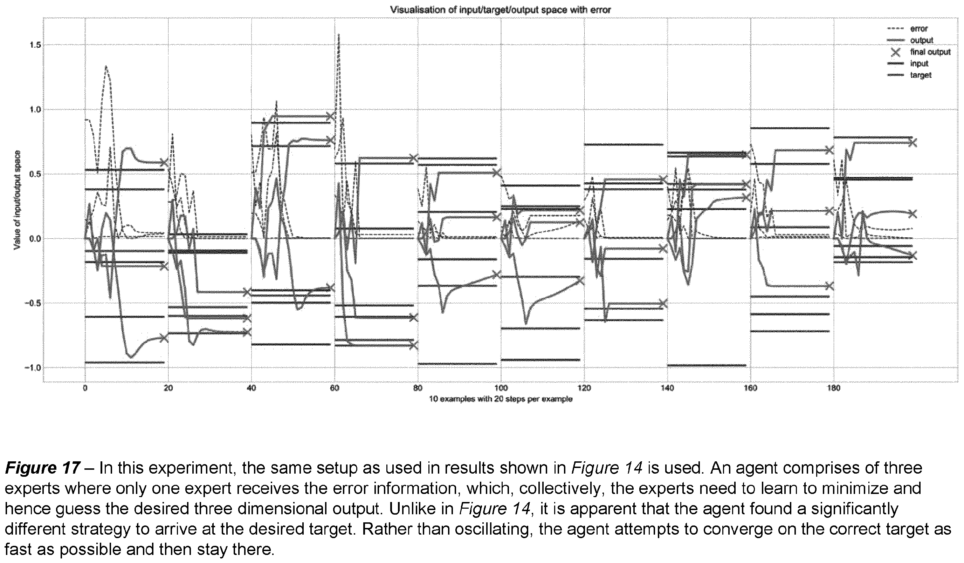

**Figures 16** **and** **17** illustrate further experimental results obtained with the "Badger" agent; and

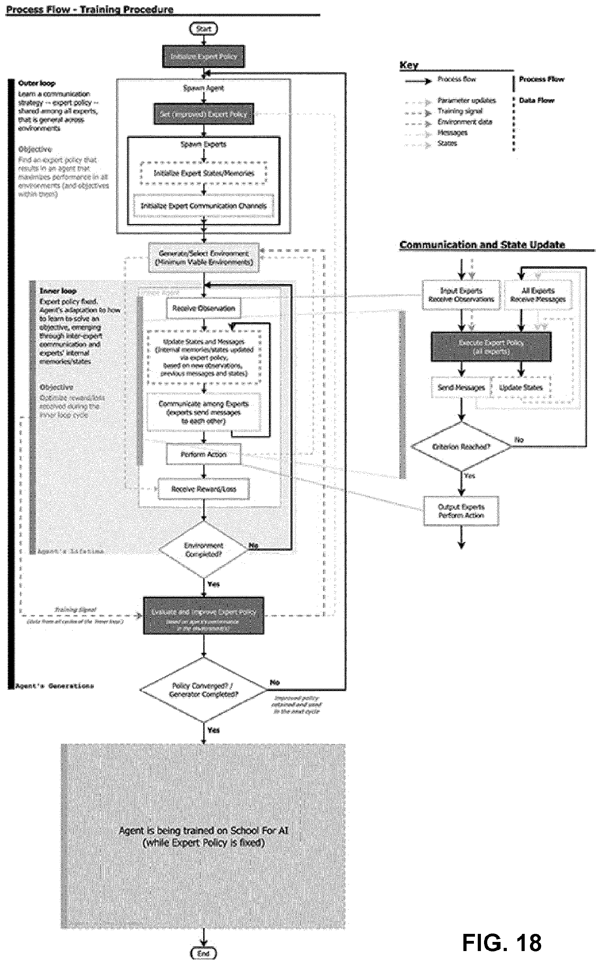

**Figure 18** is a process flow chart illustrating an example of the inner and outer loop, in accordance with an embodiment.

### DETAILED DESCRIPTION

The herein disclosed embodiments of the present invention provide an improved AI system that is configured to learn to solve new tasks quickly when deployed in an environment, and an associated method for training the AI system to determine the most effective communication algorithm to employ, to enable the system to adapt to learning to solve the new tasks. In this regard, an objective of the herein disclosed AI system is to learn any desired task quickly, while retaining knowledge of previously solved tasks. An advantage associated with the herein disclosed improved AI system is that, as a result of its modular configuration, which will be discussed in further detail below, it is scalable, flexible and efficient.

In the enclosed figures and for the avoidance of doubt, it is to be appreciated that like numbered reference numerals appearing in different figures, refer to the same features.

Figure 1 is a schematic diagram illustrating the functional modules comprised in an exemplary AI system 100, in accordance with an embodiment. It is to be appreciated that the functionality provided by the different illustrated functional modules may, in alternative embodiments, be provided by any number of different modules. Similarly, it is envisaged that the functionality of the illustrated modules may, in certain embodiments, be provided by a single module. The illustrated functional modules may, in certain embodiments, be implemented in software and/or in hardware. The precise implementation is irrelevant for present purposes, suffice it that the designated functionality is provided.

The exemplary AI system 100 comprises an input module 102 arranged to receive input data, which input data may relate to data associated with an external environment in which the AI system 100 is deployed, and which is used by the AI system 100 to learn. During training of the AI system 100, the input data may relate to a training data set used to train the AI system 100 to perform one or more desired tasks. In some embodiments the training data set may relate to a curriculum comprising a plurality of different tasks that are to be learned by the AI system 100. Within the present context the term "curriculum" is used to designate a plurality of different tasks, without introducing any restriction to the order in which the plurality of different tasks are to be learned. In this regard, it is noted that the term "environment" is also commonly used in the literature to refer to the same concept. The input module 102 may be operatively coupled to an agent module 104, which agent module 104 may be coupled to an output module 106. The agent module 104 is configured to receive input data from the input module 102, to process the input data, and to generate output data for the output module 106. When deployed, the output data may relate to a determined action.

Within the context of the present disclosure, the term agent is used with its normal meaning within the field of Artificial Intelligence - namely, a decision-making unit that interfaces with an external environment. The agent is configured to receive inputs from its environment, and to output actions to the environment. For example, where the agent relates to a robotic agent arranged to control operation of a robot, the inputs may relate to sensory inputs, and the output action may relate to control signals used to control operation of various different parts of the robot, such as an arm, leg etc. Similarly, where the agent relates to a computerised object identification system, the inputs may relate to images of objects, and the output actions may relate to data identifying the objects appearing in the input images. Thus, the output actions themselves are data, and for present purposes the outputs will be described simply as output data, but this is to be understood in its broadest sense. Operation of the agent is defined by an agent function, also referred to herein as an agent policy. Further details of the agent policy are discussed below. The interested reader is directed to Chapter 2 of Russell and Norvig's "Artificial Intelligence: A Modern Approach", Third Edition, © Pearson Education Limited 2016, which describes the concept of an agent in further detail, and which definition is incorporated herein.

The agent module 104 may comprise a plurality of sub-agents 108, which are arranged in use to communicate with each other, in accordance with a sub-agent policy, to process the input data received from the input module 102, and to generate the output data for the output module 106. A sub-agent 108 may be considered as a constituent processing component of the agent module 104. The sub-agent policy defines the communication algorithm that is adopted and executed by the plurality of sub-agents 108, to communicate with each other in processing input data. Within the context of the present disclosure, the terms "agent policy" and "sub-agent policy" refer to different, but related operational functions. Sub-agent policy refers to the communication algorithm that is deployed on and executed by the plurality of sub-agents 108 comprised in the agent 104. Agent policy refers to the behaviour of the entire agent module 104 as a result of the execution of the sub-agent policy by the plurality of sub-agent modules 108 comprised in the agent module 104, given the agent's input data, the sub-agents' internal memory states, and inter sub-agent communication (i.e. communication between the plurality of sub-agent modules 108). The communication algorithm represented by the sub-agent policy defines how the plurality of sub-agents 108 communicate with each other, including defining what the communication channels between the plurality of sub-agents 108 are, how they should be amended to improve the system's 100 ability to learn new tasks, and what data is sent across them. In certain embodiments it is envisaged that each sub-agent 108 is configured with the same sub-agent policy. In alternative embodiments, it is envisaged that a plurality of different sub-agent policies may be implemented on different sub-agents. Going forward, and for the purposes of enabling the reader to better understand features of the invention, embodiments will be disclosed in which a single shared sub-agent policy is adopted by the plurality of sub-agents 108. Furthermore, the terms communication algorithm and communication policy will, going forward, be used to interchangeably refer to the sub-agent policy. Similarly, the terms agent and agent module 104 will also be used interchangeably going forward, and have the same meaning. This is also true of the terms sub-agent and sub-agent module 108.

In certain embodiments, and as illustrated in Figure 1, the agent 104 comprises two different sub-agents 108, although in most applications it is envisaged that the number of sub-agents 108 will be greater than two. The plurality of sub-agents 108 may be configured for memory-based learning, and may be configured with internal memory states. Communication between the plurality of sub-agents 108 gives rise to adaptations in the internal memory states of the sub-agents 108, which enables the plurality of sub-agents 108, and hence the agent 104, to learn to solve new tasks. It is important to appreciate that it is the adopted agent policy - the adopted communication algorithm - which defines how the different sub-agents 108 communicate, with whom, and how established communication channels between the sub-agents 108 are to be varied to improve how the system 100 learns new tasks. Since the internal memory states of individual sub-agents 108 are directly associated with the communication channels, it follows that the internal memory states of the sub-agents 108 are also a function of the adopted agent policy. Each individual sub-agent module 108 may be considered as a decision-making sub-unit of the agent module 104.

The AI system 100 further comprises a sub-agent verification module 110, configured to analyse the generated output data, and to determine, on the basis of this analysis, if the agent module 104 is behaving in a desired or expected manner in respect of the input data. Analysis of the generated output data may comprise quantifying the performance of the system 100. For example, in certain embodiments this may comprise performing a reward or loss analysis, in which the agent 104, and therefore the plurality of sub-agents 108 are rewarded or penalised in dependence on the proximity of the generated output data to an expected or desired output. The AI system 100 may also comprise a sub-agent 'policy' update module 112, configured to analyse the performance of the adopted communication algorithm, and in dependence on this analysis, to vary the adopted communication algorithm for use in subsequent training cycles of the system 100, in order to iteratively improve the system's ability to learn. In other words, the sub-agent policy update module 112 is configured, in use, to enable the system 100 to determine, iteratively, the most effective communication algorithm required to enable the plurality of sub-agents 108 to learn any desired plurality of different tasks.

Both the sub-agent verification module 110 and the sub-agent 'policy' update module 112 are operatively coupled to the output 106 and input 102 modules. In certain embodiments, the sub-agent verification module 110 may be configured to verify if the plurality of sub-agents 108 are performing in the desired or expected manner with respect to a predetermined metric. For example, during training the predetermined metric may relate to how well the generated outputs converge to the expected solutions. Similarly, the time taken to converge to the expected solution may also be used as a metric. Time may be selected as the predetermined metric where it is desired that the AI system 100 learn quickly. Alternative metrics are also envisaged, and selection of the specific metric or metrics to use, will depend on the desired performance characteristics of the AI system 100.

The sub-agent verification module 110 may additionally be operatively coupled directly to the agent 104 and the plurality of sub-agent 108 modules, in order to determine if the agent module 104 and plurality of sub-agents 108 are behaving in a desired manner, where such behaviour may not be observable simply from an analysis of generated output data. This enables the sub-agent verification module 110 to verify additional performance metrics than may be determined from an analysis of the generated outputs alone.

In use, the sub-agent 'policy' update module 112 is configured to determine if the communication algorithm, i.e. the 'sub-agent policy', requires modification to improve the system's ability to learn new learning algorithms that solve new tasks. In certain embodiments, this may comprise modifying the communication algorithm to improve the speed with which the AI system 100 adapts to learning new tasks, while retaining existing knowledge. In certain embodiments this may comprise modifying the communication algorithm to improve the quality of the output data generated by the AI system 100, in respect of the tasks presented to it for learning. In embodiments in which the sub-agents 108 relate to neural networks, the communication algorithm may be modified to improve a predetermined metric, such as, but not limited to any one or more of: classification accuracy, reward signal, or speed of adaptation to a particular value of solution. In embodiments where the sub-agents 108 each relate to a neural network, the agent module 104 may be considered as comprised of a network of interlinked, communicating neural networks.

Modification of the communication algorithm may comprise varying one or more parameters of the algorithm, also referred to as "sub-agent policy parameters". Determination of whether the communication algorithm (i.e. the sub-agent policy) requires modification may be undertaken in dependence on an analysis of the output data generated by the agent module 104, received from the output module 106. In certain embodiments, in which the sub-agents 108 comprise a neural network, this may be achieved by using a procedure such as stochastic gradient descent, where a step proportional to the negative of the gradient of the metric of interest (or an approximation thereof) at the current observation or batch of observations, is taken in the state space of sub-agent policy parameters. Other approaches, such as evolutionary methods, simulated annealing or other gradient-based and gradient-free approaches are also envisaged, with similar behaviour outputs.

During the training phase of the AI system 100, the sub-agent verification module 110 and the sub-agent 'policy' update module 112 are configured to train the AI system 100 to learn to solve new tasks, by inputting training input data sets in to the AI system 100, and assessing output data with respect to one or more predetermined metrics, as described previously. In certain embodiments, the predetermined metrics may comprise expected output data sets. By comparing the generated outputs with respect to one or more predetermined metrics, which in certain embodiments may comprise one or more expected outputs, performance of the AI system 100 may be assessed. Once performance of the AI system 100 has been assessed, actions may be taken to improve its performance, with respect to the desired metric. Both the sub-agent verification module 110 and the sub-agent policy update module 112 are configured to take actions that enable performance of the AI system to be optimised. The sub-agent policy update module 112 may, in certain embodiments be configured to vary parameters of the sub-agent policy. Execution of the communication algorithm (sub-agent policy) results in variation of the internal memory states of the plurality of sub-agents 108, which arises as a result of the variation of the operative communication channels between the plurality of sub-agents 108, and data transmitted across it. Varying the parameters of the sub-agent policy (i.e. varying the communication algorithm adopted by the sub-agents 108) modifies the communication strategy adopted by the plurality of sub-agents 108 to communicate with each other.

In accordance with some embodiments in which the sub-agent architecture may comprise one or more neural networks, the sub-agent 'policy' update module 112 may be configured to determine if it is necessary to vary neural network parameters. For example, the sub-agent 'policy' update module 112 may be configured to vary the weights adopted by the connections between neurons within the neural networks encoding the communication algorithm in the plurality of sub-agents 108. The plurality of sub-agents 108 may be configured as memory-based learning sub-agents, which enables each sub-agent 108 to hold a unique memory state in use. This is achieved as each sub-agent executes the communication algorithm. As the communication algorithm is executed by the plurality of operatively connected sub-agents 108, the sub-agents 108 communicate data with each other in order to solve the task at hand. To this end, the sub-agent modules 108 may determine, on the basis of the communication algorithm, which other sub-agent modules to communicate with, in order to solve the task at hand. In accordance with the executed communication algorithm, the operative communication channels between the plurality of sub-agents 108 may be varied in order to solve the input task. This enables the plurality of sub-agents 108 to distribute the task of learning to solve the input task across the plurality of sub-agents 108. Distributing the task of learning across the different sub-agents 108 may result in individual sub-agents 108 using their unique internal memory states to solve a different component of the input task, whilst collectively enabling the plurality of sub-agents 108 to learn to solve the input task. As the internal communication channels between sub-agents 108 are varied, the data sent across those channels, between the plurality of sub-agents 108 varies, which in turn varies the internal memory states of the different sub-agents 108. This will become clearer when considering the agent architecture illustrated in Figure 2 discussed below. Varying the internal communications channels operatively connecting the plurality of sub-agents 108, helps to improve the agent's 104 performance in solving the one or more input tasks. The object of varying the communication algorithm parameters (i.e. the sub-agent 'policy') is to improve the agent's 104 ability to learn to solve new tasks. In certain embodiments the metric used to assess the performance of the communication algorithm may be the speed and quality with which the agent 104 is able to learn to solve the one or more new tasks.

It is envisaged that variation of the internal memory states of the plurality of sub-agents 108, and variation of the communication algorithm parameters adopted by the plurality of sub-agents 108, may be carried out during training of the AI system 100 using a two-stage approach. This is described in further detail in relation to the process flow chart of Figure 4.

Figure 2 is a schematic diagram illustrating the internal architecture of the agent 104 of Figure 1, albeit comprising a plurality of sub-agents 108 greater in number than two. In the embodiment of Figure 2 the plurality of sub-agents 108 are arranged in a layered configuration, comprising an input sub-agent layer 114, a hidden sub-agent layer 116, and an output sub-agent layer 118. It is however to be appreciated that the illustrated layered configuration is but one non-limiting example of the configuration of the plurality of sub-agent modules 108, and other configurations, including unstructured configurations are also envisaged. For present purposes it is immaterial what type of configuration is implemented.

Returning to the layered configuration of sub-agent modules 108 of Figure 2, sub-agents 108 located in the input sub-agent layer 114 are operatively coupled to the input module 102, and are arranged in use to receive input data directly from the input module 102. The plurality of sub-agent modules 108 located in the hidden sub-agent layer 116, are arranged in use to receive input data from the sub-agents 108 located in the input layer 114. The sub-agents 108 located in the output layer 118, are arranged in use to receive input data from the sub-agents 108 located in the hidden layer 116. The hidden layer 116 may comprise one or more layers of sub-agents 108. Each layer of sub-agents 108 is illustrated in Figure 2 as a distinct column of sub-agents 108. Each layer of sub-agents 108 receives input data from the preceding layer. Where the hidden layer 116 comprises a plurality of different sub-agent layers, such as is illustrated in Figure 2, it is clear that some of the sub-agents 108 located in the hidden layer 116 will receive inputs from other sub-agents 108 located in the hidden layer 116. It follows from the preceding description that the output data generated by the sub-agents 108 located in the input layer 114, serves as the input data to at least some of the sub-agents 108 located in the hidden layer 116. Similarly, the output of the hidden layer 116 serves as the input to the sub-agents 108 located in the output layer 118. For present purposes, the precise number of sub-agents 108 comprised within the agent 104 is immaterial. The internal memory states of each sub-agent 108, will, in part, be dependent on its active communication channels 119, since this affects the data input to the sub-agent 108. It follows that as the agent 104 and the plurality of sub-agents 108 execute the communication algorithm and vary the operative communication channels between the different sub-agents 108, the internal memory states of the sub-agents 108 will change.

In certain embodiments, the operative communication channels 119 operatively connecting the plurality of sub-agents 108, may be configured to introduce diversity in the input data. This is particularly useful when executing the communication algorithm for the first time. In other words, when first initialising the agent 104 and associated sub-agents 108. Since all sub-agents 108 are configured with the same communication algorithm, if the plurality of sub-agents receive the same input data, then each sub-agent 108 will output the same output data, and have the same internal memory state. Thus, to ensure that the plurality of sub-agents 108 are able in use to achieve the functionality of a distributed learning system, requires diversification of the input data. At least two different embodiments are envisaged to achieve this. In a first embodiment, the input data may be partitioned and different components input to different sub-agents 108a and 108b. Similarly, this might be achieved by associating unique identifiers associated with specific sub-agents to input data, and forwarding the input data to the required sub-agent on the basis of the unique identifier. This ensures that whilst each sub-agent 108 may share the same communication algorithm, the inputs to the sub-agents 108 are different, and as the different inputs are propagated through the network of sub-agents 108 illustrated in Figure 2, different sub-agents 108 will achieve different internal memory states. In a second embodiment, which is illustrated in Figure 2, it is envisaged that the input sub-agents 108a and 108b are configured with asymmetric communication channels with the sub-agents 108 located in the hidden layer. This ensures that the data input to the sub-agents 108 located in the hidden layer is diversified, thus ensuring that sub-agents 108 acquire unique internal memory states in use.

In certain embodiments, the communication channels 119 illustrated in Figure 2, may also comprise recurrent communication channels, in which case at least some of the sub-agent modules 108 are operatively connected by recurrent communication channels. For example, the sub-agents 108 located in the hidden sub-agent layer 116, may also be operatively connected by recurrent communication channels.

Figure 3 is a schematic diagram illustrating the internal architecture of a single sub-agent 108, in accordance with an embodiment in which the sub-agent 108 comprises a recurrent neural network. The neurons 120 comprised in the neural network may be arranged in an input layer 122, a hidden layer 124, and an output layer 126. The neurons 120 comprised in the input layer 122 receive data input from the one or more sub-agents 108 located in a preceding layer, and activations from the sub-agent's hidden layer from the last time-step, all weighted by learned and potentially different parameters 123. Similarly, the neurons 120 located in the output layer 120 receive as an input the output from the neurons in the hidden layer 124, also weighted by learned parameters 123. The output from the output layer 126 either serves as the input to a sub-agent 108 located in the succeeding layer, or is output directly to the output module 106 if the sub-agent 108 is comprised in the output sub-agent layer 118. Each one of the neurons 120a, 120b, 120c, 120d located in the hidden layer 124 has an associated unique internal memory state 121a, 121b, 121c, 121d. At each time-step, each neuron 120a, 120b, 120c, 120d located in the hidden layer 124 receives input data, weighted by learned parameters 123, from neurons 120 located in the input layer 122 and activations from the previous time step stored in internal memory 121a, 121b, 121c, 121d, also weighted by learned parameters 123. Each learned parameter 123 can comprise a different learned value. The activations stored in internal memories 121a, 121b, 121c, 121d, which represent the internal memory states of the neurons 120a, 120b, 120c, 120d located in the hidden layer, are updated via a communication channel 125 at each time step (i.e. during each data iteration), and passed along the communication channel 125 to memory neurons 122a, 122b, 122c, 122d located in the input layer 122, for use in the next time step. In this way, the sub-agent's 108 processing capabilities change over time as its internal memory states change, and the activations associated with unique memory states obtained during previous iterations are used in processing new input data. Thus, information learned by the system in learning previous tasks, is used to learn to solve currently inputted tasks. Furthermore, it is to be appreciated that the internal memory states of a specific sub-agent 108 will also be dependent on the data input to the sub-agent. In this way, different sub-agents 108 achieve different internal memory states, which contribute to the distributive learning capabilities of the agent 104 and the AI system 100.

In certain embodiments, the architecture of the recurrent neural network, together with the learned parameters 123, shared across the plurality of sub-agents 108, encode the communication algorithm (the "sub-agent policy"). In contrast, the internal memory state 121a, 121b, 121c, 121d, depicted collectively as internal memory state 128 in Figure 3, encode the evolving dynamics of the sub-agent 108, its internal interactions and already learned knowledge, and are unique to the specific sub-agent 108.

In accordance with an embodiment, before the AI system 100 is trained, each of the sub-agents 108 comprised within the agent 104 may be configured with the shared communication algorithm, and operatively connected in a manner enabling at least some diversification of the data being propagated through the plurality of sub-agents 108, as described above. Where the sub-agents 108 each comprise a neural network, the neural networks may be defined by the same set of parameters/weights 123 defining the functional property of the behaviour of the sub-agents 108. The communication channels operatively coupling the different sub-agents 108, and the data that is sent across the channels, and the sub-agent's internal memory states, may differ from conception. As the AI system 100 is trained to solve tasks, and the plurality of sub-agents 108 begin communicating with each other in accordance with the shared communication algorithm, at least some of the sub-agents 108 will maintain distinct unique internal memory states, irrespective of the fact that each sub-agent 108 may be adopting the same communication algorithm. The distinct unique internal memory states achieved during use of at least some of the sub-agents 108, enables the AI system 100 to learn to solve the desired tasks. This arises as a result of the networked configuration of sub-agents 108, in which the different sub-agents 108 receive different data inputs, depending on their location or learned functionality within the network.

Figure 4 is a process flow chart illustrating the steps comprised in an iterative method 130 of training the AI system 100 of Figure 1. More specifically, the training method 130 illustrates a two-stage training process adopted to train the AI system 100 to learn to solve a desired curriculum, and to learn an effective communication algorithm for learning to solve new tasks. A curriculum relates to a set of one or more tasks. Training the AI system 100 to learn to solve the curriculum, results in the AI system 100 learning to carry out several different tasks, rather than a single task, and is an advantageous approach to take for training AI systems having complex functionality.

The method begins at step 132, in which the initial communication algorithm (i.e. the communication "policy") adopted by all sub-agents 108 comprised within the agent 104, is initialised. In embodiments in which the sub-agents 108 comprise a neural network, the communication policy defines the communication behaviour of the plurality of sub-agents 108. This in turn defines the behaviour of each neuron, its connectivity to other neurons, activation function, and other parameters affecting the behaviour of the sub-agent 108. For example, this comprises defining the values of the associated parameters defining the connectivity of the neurons. At step 134, a new agent 104 is initiated, comprising the plurality of sub-agents 108. The sub-agents 108 are initially in a default configuration state, comprising an initial memory state, and an initial default configuration of communication channels operatively connecting the plurality of different sub-agents 108 together. However, in use as the communication policy is executed on the plurality of sub-agents 108, unique activation states, equally referred to as unique memory states, will be achieved, as the communication channels, and data sent across, are varied in accordance with the executed communication algorithm, to learn to solve the one or more input tasks. Each sub-agent 108 is also configured with a shared communication strategy defined by the shared communication algorithm configured on each sub-agent. Once the agent 104 and sub-agents 108 have been configured with their initial configuration, the AI system 100 may begin the training process 130, which comprises learning to solve a selected curriculum.

The learning curriculum is selected, at step 136, and initiates the training process. A new curriculum element is selected and input to the agent 104, at step 138. The sub-agent communication policy is executed, at step 140. This comprises inputting and processing the one or more selected curriculum elements through the plurality of sub-agents 108. As the curriculum elements are being processed by the plurality of sub-agents 108, the internal memory states of the sub-agents 108 are modified. This occurs by virtue of executing the communication algorithm in processing the input curriculum elements, and has been represented in step 142. However, it is to be appreciated that the updating of the internal memory states is not an independent method step as such, but rather is a consequence of executing the communication algorithm by the plurality of sub-agents 108 in step 140, and has been represented as method step 142 to emphasise that the internal memory states of the sub-agents change as the sub-agents execute the communication policy.

The step of processing the one or more input curriculum elements by executing the sub-agent communication policy 140, and updating the internal memory states 142 of the plurality of sub-agents 108, is repeated until a threshold condition is achieved, at step 144. In certain embodiments, the threshold condition may relate to executing the sub-agent communication policy for a predetermined number of iterations, before analysing the generated outputs. For example, for illustrative purposes only, the threshold number of iterations may relate to ten iterations, although the precise number of iterations is immaterial provided that at least one iteration is carried out. Iteratively repeating the steps of executing the sub-agent communication policy 140 enables the plurality of sub-agents 108 to vary the communications channels operatively connecting them together, to send messages across those channels and subsequently to modify their internal memory states, in order to learn to solve the input one or more curriculum elements. Determination of whether the threshold condition has been achieved, at step 144, may be carried out by the sub-agent verification module 110.

In certain embodiments, the threshold condition may relate to a convergence or measure condition being achieved in the data generated by the plurality of sub-agent modules 108. For example, the convergence condition might relate to whether the different sub-agent modules generate data indicative of an agreement on a solution to the input curriculum element.

When the threshold condition has been achieved, one or more outputs generated by the agent 104 are received, at step 146. The outputs are analysed and the agent 104, and accordingly the sub-agents 108, receive a reward, a loss, or any other structured feedback, at step 148, such as classification loss or positive reward for a correct action. The reward, loss, or other feedback signal provide a qualitative assessment of how well the agent 104 has solved the one or more input curriculum elements. At step 150, it is determined if the selected curriculum has been completed and/or solved. If any curriculum elements remain outstanding, and/or any curriculum elements have not been solved, then steps 138 through 150 are iteratively repeated, until all elements of the curriculum have been processed. Determination of whether the selected curriculum has been completed and/or solved may be carried out by the sub-agent verification module 110. Once all the data elements comprised in the learning curriculum have been processed and solved, the outputs received at step 146 and/or the reward, loss or other feedback received at step 148 are reviewed by the sub-agent 'policy' update module 112, at step 152, and used to evaluate the performance of the adopted communication algorithm. The sub-agent verification module 110 and the sub-agent 'policy' update module 112 respectively analyse outputs and rewards, losses or other feedback generated and received by the AI system 100 in respect of different performance metrics, and each module may generate an associated loss function defined in respect of the adopted performance metric. Non-limiting examples of the performance metric may relate to a fitness function, reward function, classification accuracy, and a predictive accuracy. Similarly, in certain embodiments the sub-agent verification module 110 may analyse the generated outputs for accuracy or proximity to expected outputs, or convergence to expected solutions. In contrast, the sub-agent 'policy' update module 112 may adopt a metric quantifying the speed with which the AI system 100 was able to learn to solve the new task, as achieved on the basis of the currently implemented sub-agent communication algorithm.

At step 154 it is determined if the communication policy has converged - in other words, that the implemented communication algorithm has resulted in the AI system performing in an acceptable manner. For example, if the sub-agent policy has resulted in the AI system taking longer to solve the input task than considered acceptable, then this deficient performance would be identified at step 154. It is important to appreciate that other performance metrics could be used for assessing performance at step 154, other than speed of convergence. If it is determined that the sub-agent policy has not converged, then the communication algorithm is modified to improve performance, at step 156. In accordance with certain embodiments, this may comprise varying certain parameter variables of the communication algorithm, using methods such as stochastic gradient descent, evolutionary methods or other optimization procedures taking into account the corresponding loss/reward functions. Steps 134 through 154 are then iteratively repeated until the communication algorithm has converged sufficiently - in other words, until the communication algorithm enables the AI system to perform in an acceptable manner. In this way, the training method 130 enables the AI system 100 to determine the most effective communication algorithm to employ in solving new tasks. The communication algorithm *per se* is not task specific, but rather defines a general communication strategy that enables the plurality of sub-agents 108 to communicate effectively in adapting to solve largely any new task presented to it.

If, at step 154 it is determined that the communication algorithm has converged, then the algorithm is fixed, at step 158. In accordance with some embodiments, convergence may comprise the evaluation of metrics associated with the performance and speed with which the communication algorithm enables a solution to be determined to a collection of tasks over a predefined period of time, or a predefined spectrum of tasks of varied diversity. The AI system 100 is now ready for deployment in an environment, at step 160, and the training process is completed. On completion, the AI system 100 has learned to solve new tasks as input to it.

Method steps 138 through 150 define an iterative cycle, which for present purposes is referred to as the 'inner training loop'. In the inner training loop, only the internal memory states, communication channels, and data shared across the communication channels between the plurality of sub-agents 108 are varied, in accordance with the implemented communication algorithm, to learn to solve the input curriculum. In other words, new input tasks are learned and solved by the AI system 100 in the inner training loop. The sub-agent verification module 110 effectively determines if the existing internal memory states of the plurality of sub-agents 108 enable the plurality of sub-agents 108 to solve the input task.

Once the inner training loop is completed, at step 150, the method proceeds with steps 152 and 154, which define another iterative process comprising steps 134 through 156 referred to as the 'outer training loop'. The objective of the outer training loop is to determine if the parameters associated with the communication algorithm adopted by the plurality of sub-agents 108 need to be modified, in order to improve the sub-agents' ability to learn to solve new tasks. In some embodiments, steps 152, 154 and 156 may be carried out by the sub-agent 'policy' update module 112. In this way the sub-agent 'policy' update module 112 effectively determines if the communication algorithm adopted by the plurality of sub-agents 108 needs to be modified to improve the agent's 104 ability to learn to solve new tasks.

Performance of the adopted communication algorithm (i.e. the communication policy) may be assessed in terms of how rapidly the implemented communication algorithm enables the plurality of sub-agents 108 to adapt to learning to solve new tasks. The determination of whether the parameters associated with the implemented communication algorithm require modification may be taken on the basis of the output analysis and observed accumulated loss, determined at step 148. For example, the parameters may be updated to minimise the time taken to learn to solve a new task. In certain embodiments a threshold time value may be selected, with respect to which the performance of the communication algorithm is assessed. If the time taken to adapt to learning to solve the new task is less than the threshold time period, then the performance of the adopted communication algorithm may be considered sufficient. If instead the time taken to adapt to learning the new task is greater than the threshold time value, corrective action may be taken. If it is determined, at step 154 that the parameters associated with the implemented sub-agent communication policy require updating, then the method proceeds with steps 156, where the parameters of the communication algorithm are modified, followed by steps 134 through 154 - that is to say, the inner and outer training loops are repeated.

In certain embodiments, the internal memory states of the plurality of sub-agents obtained from previous iterations are reset for all subsequent cycles of the outer training loop. In such embodiments, the process of initialising a new agent, as set out in step 134, comprises resetting the internal memory states. This ensures that there is no residual bias present in the sub-agents 108 from previous iterations of the implemented communication algorithm. In alternative embodiments, the internal memory states of the plurality of sub-agents obtained from previous iterations may be retained for subsequent cycles of the outer training loop. In such embodiments, the process of initialising a new agent, as set out in step 134, does not comprise resetting the internal memory states, but only updating at least some of the parameters associated with the sub-agent policy.

Once a communication algorithm is determined using the outer loop training cycle that satisfies the required performance metrics, at step 154, the communication algorithm is fixed, the training process of the AI system 100 is completed, and the system is ready for deployment in a desired environment.

It is to be appreciated that during the inner training loop, individual sub-agents 108 implement the current communication policy, and will adopt customised processing behaviour, emerging as a result of the different sub-agents 108 communicating with each other to solve input tasks in accordance with the current communication policy. This communication takes the form of sub-agents 108 exchanging data messages (observations) with each other, and updating their internal memory states with respect to previous processing iterations within the inner loop.

The outer training loop enables the AI system 100 to determine if the performance of the current communication policy satisfies a desired performance metric. The communication policy is refined and improved as the AI system 100 executes several iterations of the outer training loop. In this way, the AI system 100 is able to determine the most effective communication policy that the agent 104, and consequently the plurality of sub-agents 108, need to employ to enable them to learn to solve new tasks. In certain embodiments, as disclosed herein, an objective of the communication policy is to enable the agent 104 and consequently the plurality of sub-agents 108, to learn to solve new tasks quickly. Accordingly, in such embodiments the outer training loop enables a communication policy to be determined that provides this benefit. To help achieve this the outer training loop may reward communication algorithms that enable the agent 104, and consequently the plurality of sub-agents 108, to solve new tasks rapidly.

It is to be appreciated, in accordance with the illustrated embodiments, that once the communication algorithm has been fixed, each sub-agent 108 is configured with the same communication algorithm. Each sub-agent 108 is still capable of having unique internal memory states, in dependence on the operative communication channels established with other sub-agents 108. This is clarified in the below discussion of how the deployed AI system 100 is able to learn to solve new tasks, with reference to Figure 5.

Whilst the step of selecting the curriculum for training, at 136, is illustrated as succeeding the step of initialising the agent, at step 134, this is for non-limiting illustrative purposes only. In certain embodiments the step of selecting the learning curriculum may precede the step of initialising the agent - in other words, step 136 may precede step 134. The order in which these two steps are carried out is immaterial for present purposes, albeit when the step of selecting the learning curriculum precedes the step of initialising the agent, then the outer loop returns to the step of selecting the learning curriculum (i.e. step 136) rather than the step of initialising the agent (i.e. step 134).

Figure 5 is a process flow chart illustrating the method 170 used by the trained AI system 100, to continue learning, when deployed in an environment. In particular, Figure 5 illustrates how the inner training loop may be used by the AI system 100, to learn to solve new tasks, when the AI system 100 is deployed. In contrast to the training process of Figure 4, the communication algorithm (i.e. the communication policy) shared by the plurality of sub-agents 108 is now fixed, its parameters can no longer be varied, and only the internal memory states, and by association the communication channels operative between different sub-agents 108, and the data exchanged across the operative communication channels, may be varied to enable the AI system 100 to learn to solve new tasks. During deployment, observation data from the environment is received, at step 172. Note that the term 'observation' data is used during deployment to refer to input data received from the environment, and may comprise any input data associated with the environment in which the AI system 100 is deployed. In certain embodiments this may comprise sensor data, for example. The input data is input into the sub-agents 108, at step 174. Step 174 is similar to step 138 of Figure 4. The plurality of sub-agents 108 process the input data, by executing the fixed communication algorithm, at step 176, and update their internal memory states, at step 177. Recall that step 177 arises as a result of executing the fixed sub-agent policy at step 176. At step 178 it is determined if the threshold condition has been achieved, analogous to step 144 of Figure 4. If the threshold condition has not been achieved, then steps 175 through 178 are repeated until the threshold condition has been achieved. This enables the sub-agent modules 108 to adapt and vary, if necessary, their operative communication channels and messages sent across them, and hence their internal memory states to solve the task associated with the input observation.

Once the threshold condition has been achieved, the sub-agents 108 generate the required one or more outputs, at step 180. The outputs are analysed and the agent 104, and accordingly the sub-agents 108, receive a reward or a loss, at step 182, in a manner analogous to step 148 of Figure 4. At step 184 it is determined if there are any outstanding observation data to be analysed. If there is outstanding data to be analysed, then steps 174 through 184 are repeated, until all observation data has been processed, and the deployment continues. It is to be appreciated that functionally, steps 174 through 184 are analogous to the inner training loop defined by steps 138 through 150 of Figure 4. Once the communication algorithm adopted by the agent 104 and the plurality of sub-agents 108 has been fixed, all subsequent learning of the agent 104, and by extension the sub-agents 108, occurs via adaptations of the operative communication channels connecting the plurality of sub-agents 108 together, which in turn varies the data that is shared across the operative communication channels, and causes variations in the internal memory states of the sub-agents 108. It is to also be appreciated that when deployed, the learning process of the agent 104 and the sub-agents 108 is cumulative, and highly dependent on the internal memory states of the sub-agents. All subsequent learning of the AI system 100 is based on the unique internal memory states obtained during previous iterations of steps 174 through 184. In this way, as the deployed AI system 100 attempts to learn to solve new tasks, it uses information obtained from solving previous tasks, to solve the new task, in a manner similar to the human learning process. This also ensures that unlike many conventional AI systems, the current AI system 100 is continuously improving as it learns new tasks.

A significant advantage associated with the present AI system 100 is its modular architecture, which enables it to scale with ease. For example, the number of sub-agent modules 108 comprised within the agent module 104 may be arbitrarily increased to increase processing power, or other performance metrics of the AI system 100. An exemplary embodiment of an AI system 186 comprising a sub-agent spawning module 188, operatively coupled to the agent module 104, is illustrated in Figure 6. The structure of such an AI system 186 is substantially similar to the AI system 100 of Figure 1, and for this reason the same reference numbers are adopted in Figure 6 to reference shared structural features with the AI system 100 of Figure 1. This scalability is facilitated by each sub-agent 108 comprising the same shared communication policy, and by the fact that the AI system 186 can be explicitly trained to discover a scalable communication strategy. Accordingly, spawning new sub-agent modules within the agent module 104 may comprise cloning the architecture of an existing sub-agent module. This may also comprise replicating the internal memory states of an existing sub-agent, or starting with a default initial configuration. The sub-agent spawning module 188 may communicate with the sub-agent verification module 110 with instructions to spawn one or more new sub-agents for inclusion in the agent 104 during a subsequent processing iteration. As the input data is processed by the AI system 186, and the communication policy is executed on the newly spawned sub-agent, it will adopt its own unique internal memory states, in the manner previously described in respect of Figures 4 and 5. There are no upper bounds on the number of additional sub-agents that may be spawned in this way. Similarly, the sub-agent spawning module 188 may be configured to reduce the number of sub-agents comprised in the agent, where it is determined that they are not required.

It is also possible to scale the number of agents 104 comprised in the AI system 100. This may be achieved by cloning and spawning a new agent module, that replicates the existing agent module 104, including the existing agent module's architecture of sub-agents 108. The sub-agent modules comprised in the cloned agent module may be configured with the same communication policy as the sub-agent modules 108 comprised in the existing agent module. There is no upper bound to the number of additional agent modules that may be spawned in this way. Furthermore, the plurality of agent modules spawned in this way may be arranged in accordance with any topology, including but not limited to, in series or in parallel with the existing agent module. Increasing the number of agent modules increases the processing capabilities of the AI system.

Figure 7 illustrates an AI system 190 comprising a plurality of agent modules 104, in accordance with an embodiment. In the illustrated embodiment, the plurality of agent modules 104 are configured in parallel. This is for non-limiting illustrative purposes only, and the plurality of agent modules 104 could equally be arranged in series, or in a combination of the two, or in accordance with any topology. The number of sub-agents 108 illustrated as being comprised in the agents 104 is also for non-limiting illustrative purposes only, and any arbitrary number of sub-agents 108 greater than or equal to two, may be comprised in each agent 104. The AI system 190 of Figure 7 differs from the AI system 100 of Figure 1, in that it additionally comprises an agent/sub-agent spawning module 192, operatively coupled to the agent modules 104, which is configured to determine if additional agents 104 or sub-agents 108 need to be spawned. This determination may be made on the basis of a threshold performance requirement. It is envisaged that this might comprise assessing the processing power of the AI system 190, the quality or level-of detail of a solution, or speed of solving a particular task or set of tasks, for example. It is also envisaged that the agent/sub-agent spawning module may be configured to reduce the number of agents/sub-agents, where it is determined that they are not required.

In embodiments where the plurality of agents 104 are arranged in parallel, as illustrated in Figure 7, the outputs of each agent 104 are forwarded to the output module 106, for analysis by the sub-agent verification module 110, also by the sub-agent policy update module 112 during training, and by the agent/sub-agent spawning module 192 for determining if further agents 104 and/or sub-agents 108 require spawning.

Figure 8 is a process flow chart illustrating a method implemented by the sub-agent spawning module 188 of Figure 6 to determine if one or more additional sub-agent modules 108 are to be spawned, in accordance with an embodiment. The method of Figure 8 may be carried out during training and/or deployment of the AI system 186, and is complementary to the methods of any one of Figures 4 and 5. The method of Figure 8 may be carried out after the agent 104 has generated the one or more outputs, at step 146 in Figure 4, or the one or more sub-agents 108 have generated the one or more outputs, at step 180 in Figure 5. To better illustrate how the method of Figure 8 carried out by the sub-agent spawning module 188 complements the methods of Figures 4 and 5, steps 146, 148, 150, of Figure 4, and respectively steps 180, 182, and 184 of Figure 5 have been illustrated in broken lines in Figure 8.

During training of the AI system 186, and in accordance with some embodiments, the sub-agent spawning module 188 may determine if one or more new additional sub-agents need to be spawned in parallel with the reward, loss, or structured feedback determination, at step 148, and prior to determining if the selected curriculum has been completed, at step 150. In some embodiments, the sub-agent spawning module 188 may determine if the one or more new additional sub-agents need to be spawned using the reward, loss, or structured feedback determination, at step 148, as an input. The reward, loss, or structured feedback determination, at step 148, being indicative of a performance of the agent module 104, that may be used by the sub-agent spawning module 108 to determine if one or more new additional sub-agents need to be spawned. Where the reward, loss, or structured feedback determination, at step 148, is received as an input to the sub-agent spawning module, then step 148 of Figure 4 feeds into step 202 of Figure 8, instead of step 146 of Figure 4 feeding into step 202 of Figure 8. In other words, during training of the AI system 186, the input to the sub-agent spawning module 188, may be received from either step 146 or from step 148 of Figure 4.

Similarly, during deployment of the AI system 186, the sub-agent spawning module 188 may determine if one or more new additional sub-agents need to be spawned in parallel with the reward, loss, or other structured feedback determination, at step 182, prior to step 184 of determining if all observation data has been analysed. In some embodiments, the sub-agent spawning module 188 may determine if the one or more new additional sub-agents need to be spawned using the reward, loss, or structured feedback determination, at step 182, as an input. In such embodiments, step 202 of Figure 8 receives an input from step 182 of Figure 5, instead of step 180 of Figure 5 feeding into step 202 of Figure 8. In other words, during deployment of the AI system 186, the input to the sub-agent spawning module 188, may be received from either step 182 or from step 180 of Figure 5.

Further details of the method employed by the sub-agent spawning module 188 to determine if one or more new sub-agents is to be spawned is described below. The method applies equally to training and to deployment of the AI system 186, with the notable differences as indicated in the preceding paragraphs.

One or more outputs generated by the agent 104 are received by the sub-agent spawning module 188 as inputs, at step 202. In accordance with some embodiments, where the received inputs to the sub-agent spawning module 188 relate to the one or more outputs generated by the agent module 104 at respectively steps 148 and 182, then in accordance with some embodiments, the received inputs may further comprise information associated with one or more performance metrics associated with the generated outputs. Alternatively, and as explained above, the inputs received at step 202 may relate to the reward, loss, or structured feedback determination, determined at respectively steps 148 and 182,

At step 204, the sub-agent spawning module 188 determines if a threshold condition associated with a performance metric of the agent 104 and sub-agents 108 has been achieved. If it is determined that the threshold condition has not been achieved, then the sub-agent spawning module spawns, or issues instructions for one or more new sub-agents to be spawned, at step 206. The method then proceeds with respectively 150 or 184, as the case may be depending on whether the method is carried out during training 130 or deployment 170 of the AI system 186. If instead it is determined, at step 204, that the threshold condition has been achieved, then the method either proceeds with determining if the training curriculum has been completed/solved, at step 150 during training, or proceeds with determining if all observation data has been analysed, at step 184, during deployment.

The threshold condition adopted by the sub-agent spawning module 188 to determine if one or more additional sub-agents are to be spawned, may relate to any desirable performance metric associated with agent and/or sub-agent performance. Non-limiting illustrative examples of the performance metric may relate to any one or more of: the time taken for the agent and/or one or more sub-agents to generate an output; a current available memory of the system; an available computational or cognitive capacity of the system; an accuracy of how well the system is solving the input task; a projected future processing requirement of the system.

In embodiments where the performance metric relates to the time taken for the agent and/or one or more sub-agents to generate an output, the threshold condition may relate to a time threshold. When the sub-agent spawning module 188 determines that the time threshold is not met, the spawning of new additional sub-agents enables the AI system 186 during a subsequent iteration of the inner loop, to generate an output more quickly. In other words, the spawning of one or more new sub-agents enables the AI system 186 to solve a task quicker.

Similarly, in embodiments where the performance metric relates to an available computational or cognitive capacity of the system, the threshold condition may relate to a computational or cognitive capacity. When the sub-agent spawning module 188 determines that the computational or cognitive capacity is not met, the spawning of new additional sub-agents enables the AI system 186 during a subsequent iteration of the inner loop, to have an increased computational or cognitive capacity. In this way, spawning of new sub-agents enables the AI system to increase its computational or cognitive capacity. This is particularly advantageous when the AI system 186 is implemented as a distributed computing system comprising different networked hardware. In such embodiments, the spawning of new sub-agents may comprise increasing the size of the distributed hardware network, thereby increasing the available computational or cognitive capacity of the AI system 186.

In accordance with some embodiments, the agent/sub-agent spawning module 192 of Figure 7 may implement the method of Figure 8 adopted by the sub-agent spawning module 188 of Figure 6, with the notable difference being that the agent/sub-agent module 192 also determines at step 206 if one or more additional agents 104 are to be spawned. It is important to recall that an agent 104 comprises a plurality of sub-agents 108, thus spawning a new agent requires spawning additional sub-agents 108.

In certain embodiments it is also envisaged that the plurality of agents may comprise different communication policies. All sub-agents comprised within an agent may still share the same communication policy, but sub-agents comprised in different agents may comprise different communication policies. The different agents may then compete to solve input tasks, using different communication policies. This might help to accelerate the time taken to determine the most effective communication policy for learning new tasks during training, when compared to an embodiment comprising a single agent, as illustrated in Figure 1.

Equally, embodiments are envisaged in which at least some of the sub-agents comprised within an agent comprise different communication policies. The training and deployment of such a system is then substantially the same as illustrated in Figures 4 and 5. This helps to introduce diversity into the computational processing power of the agent, allowing for better robustness with respect to the wide range of tasks that the agent is expected to solve. Multiple communication policies can be more specialised than a single communication policy, which can be beneficial for certain types of tasks and environments the agent can be presented with.

As a result of the modular architecture of the present AI system, the different functional modules may be distributed over different hardware, which hardware may be located remotely to each other in a networked configuration enabling operative communication. Accordingly, in multi-agent embodiments, the different agents may be comprised, for example, in different remotely located networked servers. In accordance with some embodiments, and as mentioned previously, where the modular architecture of the present AI system is implemented in a distributed computing system, the spawning of new agents and/or sub-agents may result in an increase in the processing hardware comprised in the distributed computing system. In such embodiments, the sub-agent spawning module may determine if additional processing resources are required by spawning additional agents and/or sub-agents.

In certain embodiments it is envisaged that the threshold conditions may be dynamic, and may vary as the AI system carries out subsequent processing iterations. In other words, at least some of the threshold conditions may be learned by the AI system over subsequent processing iterations.

Within the context of the present AI system, it is important to appreciate that the plurality of sub-agents may exchange different types of data communication messages when executing the sub-agent communication policy. The messages may relate to any one or more of the following non-limiting examples: binary messages, real-valued numbers, complex structured messages, for example representing meaningful concepts at various levels of complexity, and algorithms themselves.

In certain embodiments it is envisaged that the functionality of the sub-agent verification module 110 may be implemented directly in the sub-agent modules 108. Similarly, it is envisaged that the functionality of the sub-agent policy update module 112 may be implemented directly in the sub-agent modules 108.

In certain embodiments it is envisaged that the sub-agents of the AI system may be randomly initialised when the AI system is first run. In other words, rather than configuring the sub-agents with a default initial configuration, the configuration may be randomly assigned. Similarly, the initial configuration of operative data communication channels connecting the plurality of sub-agent modules may also be randomly assigned. In such systems, as the sub-agent communication policy is executed by the plurality of sub-agents solving input tasks, the sub-agents will adapt their configurations, including their internal memory states, to solve the task at hand, as described previously. Accordingly, the initial configuration of the system is not of significant importance, but may, for example be beneficial in introducing diversity during the training phase of the system. Whilst certain specific initial configurations may be advantageous, for example, in terms of how quickly they enable the AI system to learn the communication algorithm, given enough time and executed iterations, such initial advantages will normalise, and no long term benefit will be attributable to the initial configuration.

In the short term, there can be benefits in selecting certain initial system configurations. For example, there may be significant benefits associated with configuring the system with prior knowledge. In such embodiments, it is envisaged that the AI system, and specifically the plurality of sub-agent modules, may be configured with prior knowledge obtained potentially, from other AI systems or specified by human operators. This provides the AI system with an initial state, which may be quicker to adapt to learning new tasks, and increases the AI system's speed of learning (i.e. the so-called sample-complexity). The modular architecture of the present AI system enables prior knowledge to be incorporated into the AI system with relative ease. Furthermore, this also means that the AI system does not need to be retrained to learn new tasks associated with the incorporated prior knowledge.

Whilst the presently described embodiments comprise a communication policy that has been determined through the outer loop training process, in alternative embodiments it is envisaged that the communication policy may be hard-coded and fixed from initialisation. In such embodiments all learning is then achieved by the inner training loop.

In those embodiments comprising a shared communication algorithm, it is to be appreciated that the modularity of the system in combination with the shared communication algorithm, mitigates and prevents for catastrophic forgetting, i.e. previous knowledge does not need to be overwritten with new knowledge, as new sub-agents may be generated by replicating existing sub-agent modules, and new knowledge can hence be learned by newly generated sub-agent modules, while re-using previous knowledge from existing sub-agent modules, depending on that capacity of the agent.

A further advantage associated with the modularity of the present system is that it allows for better interpretability. Rather than a large fully integrated system that is intertwined and interconnected, agent modules composed of two or more sub-agent modules, results in sub-agent specialization that would correspond to interpretable behaviour by individual experts. This helps better understanding of the operation of the agent.

In certain embodiments, it is envisaged that at least one of the sub-agent modules may comprise a feed forward neural network, in which at least some of the neurons may be configured with activation functions which produce unique values dependent on the input. In this way, the neurons within the feed forward neural network provide the same functionality as the internal memory states of the preceding embodiments. In certain embodiments, the internal memory states of the preceding embodiment, may be produced as a data output of a feed forward neural network, and provided as an input to another sub-agent.

Further details of embodiments are set out in the enclosed Annex.

While illustrative embodiments have been described herein, the scope of the present application comprises any and all embodiments having equivalent elements, modifications, omissions, combinations (e.g. of aspects across various embodiments), adaptations or alterations based on the present disclosure. The elements recited in the claims are to be interpreted broadly based on the language employed in the claims, and not limited to examples described in the present specification or during prosecution of the application, which examples are to be construed as non-exclusive. Further, the steps of the disclosed methods can be modified in any manner, including by reordering steps in inserting of deleting steps. It is intended, therefore, that the specification and examples be considered as example only, with a true scope and spirit being indicated by the following claims and their full scope of equivalents.

### ANNEX

### BADGER: Learning to (Learn [Learning Algorithms] through Multi-Agent Communication)

### Abstract

In this work, we propose a novel memory-based multi-agent meta-learning architecture and learning procedure that allows for learning of a shared communication policy that enables the emergence of rapid adaptation to new and unseen environments by learning to learn learning algorithms through communication. Behavior, adaptation and learning to adapt emerges from the interactions of homogenous experts inside a single agent. The proposed architecture should allow for generalization beyond the level seen in existing methods, in part due to the use of a single policy shared by all experts within the agent as well as the inherent modularity of 'Badger'.

### Motivation

A complex adaptive system can be described as a multi-agent system where many agents form networks, communicate, coordinate, update their state, adapt, and achieve some shared goals (Holland, 2015; Waldrop, 1992; Lansing, 2003).

The human brain can also be described as a multi-agent system, with biological neurons being the agents, and the synapses and neurotransmitters the communication channels (Sole, Moses, & Forrest, 2019). However, while there are models of neuron and synapse dynamics, we are still discovering new things about the 'policies' of biological neurons and the ways in which they communicate with each other.

In this work, we use the word 'experts' as a name for agents inside an agent, as depicted in *Figure* 9. This way, there's no confusion whether we are talking about agents in an environment, or experts inside an agent.

Initial empirical results show generalization and scalability along the spectrum of learning types.

The 'Badger' architecture goes further than this, it automates the search for an expert policy, by framing the problem as multi-agent learning (in our case, multi-expert learning). We are searching for one, universal expert policy, used in all experts (although, we expect it may be useful to have more than a single expert policy, yet fewer policies than experts). This process can be seen in Figure 10 above.

If trained on environments that select for specific agent properties, we can search for an expert policy, from which agent properties can emerge, such as incremental learning, online learning, overcoming forgetting, gradual learning, recursive self-improvement, and more.

We expect the expert policy to be fixed for the duration of an agent's life (the inner loop), therefore search for it happens in the outer loop. This means that any learning inside an agent, is a result of communication among experts, and changes of their internal states.

Conceptually, this process can be seen in Figure 12, where, in order to solve problems, experts communicate to find and employ a suitable strategy. This is only possible after an expert policy is found that enables such collective behavior.

Since experts learn to determine on their own who should communicate with whom, the overall processing of the agent can be made decentralized, meaning that in principle new instances of experts can be asynchronously added or removed.

### Architecture

In this framework, an agent is made up of multiple experts. All experts share one homogeneous expert policy (henceforth, expert policy, see Glossary).

An expert policy can be implemented as a neural network, a handcrafted program or in other ways. Experts in an agent can share more than a single expert policy, but the total number of policies should be much smaller than the number of experts. A network made from experts that have a shared neural network policy and a handcrafted policy is also possible.

Each expert is equipped with a unique and distinct internal memory. Internal memory of an expert holds information about the expert's own internal state (e.g. neural network activations, hidden state of an RNN, program variables, etc.). Adaptation to novel environments (learning how to solve tasks within them), as well as adaptation of this adaptation (learning how to learn to solve novel tasks/environments), should be the result of communication between experts and changes of their internal states. Agents should learn how to learn to solve new and unseen tasks/environments rapidly.

Once an expert policy is trained (through the outer loop), an agent doesn't learn through changes to the expert policy (e.g. no changes of weights in a neural network) - the expert policy is fixed during the agent's lifetime (the inner loop). Agent learns only via experts communicating and through updates to their internal states, in order to solve, or learn to solve new tasks or new environments.

### Topologies

The configuration of experts within an agent, in the 'topographical' sense, and the determination of who interacts with whom is of vital importance as it governs the internal dynamics of communication and hence the emergence of learning algorithms.

Our starting assumption is that every expert can communicate with every other expert. Naturally, as the network grows, this would quickly become infeasible.

The ultimate goal is entirely learned and dynamic topology where, rather than fixed connectivity, experts determine whom to talk to at inference time, depending on the task/environment that is being solved, internal states of experts and messages that they receive. Stepping away from fixed and rigid topology has recently been shown to yield intriguing results (Ha, Dai, & Le, 2016; Gaier & Ha, 2019).

We have experimented with the following approaches thus far:
- Hardwired topologies where input experts propagate signals to hidden layer experts with recurrent connections, followed by propagation to output experts.
- Hardwired and 'Homogeneous' - no difference between input, hidden and output layers
- Dynamic topologies - e.g. via attention module of the Transformer architecture (Vaswani, et al., 2017)
- Random topologies - enforce the expert policy to be as much invariant to agent topology as possible

The above are only examples of some of the approaches we have tried thus far. Many other methods and combinations are possible, each with different benefits and drawbacks, for example, in terms of scalability, ease of training or representational capacity.

### Training Procedure

In the proposed framework, training is performed using a two-stage training procedure. This procedure comprises of an outer loop and an inner loop. This falls within the areas of meta-learning (Bateson, 1972; Schmidhuber J., 1987; Bengio, 2000; Hochreiter, Hochreiter, Younger, & Conwell, 2001; Grefenstette, et al., 2019) and bi-level optimization (Colson, Marcotte, & Savard, 2007; Sinha, Malo, & Deb, 2018; Franceschi, Frasconi, Salzo, Grazzi, & Pontil, 2018). As, in our case, learning and adaptation happens in the internal states of experts, this can also be viewed as a form of memory-based meta-learning, c.f. (Ortega, et al., 2019).

### Outer loop

The outer loop corresponds to the search for the expert policy. The agent is trained across an array of different environments. The expert policy is parameterized via a neural network or other model, whose parameters, also sometimes called meta-parameters (Grefenstette, et al., 2019), are optimized to maximize performance on environments both seen and unseen by the inner loop. The expert policy is general to a large set of (seen and unseen) environments and tasks. The outer loop training can also be viewed as a multiagent (e.g. reinforcement) learning problem (Tuyls & Weiss, 2012).

Manual/Handcrafted Expert Policy: A parallel approach to searching for the expert policy via the outer loop is to "just program it", like a standard hand coded program. We are investigating this handcrafted expert policy approach, because any progress in it, leads to adding more useful constraints to our outer loop search approach, which leads to its improvements. However, in this paper, we don't go into details, except saying that we believe that the minimum requirements for a handcrafted expert policy should be: experts detecting and generating patterns, simple credit assignment, modifiable expert after receiving special messages from another expert.

### Inner Loop

The Inner loop corresponds to behavior during an agent's life time. The expert policy is now fixed (weights/meta-parameters are not adjusted). The agent is presented with a single environment or a set/sequence of environments and tasks and experts within an agent begin to communicate with each other based on incoming data from presented environment(s). The agent quickly adapts by experts communicating with each other and by changing their internal states. Changes in the internal states of experts should give rise to an algorithm that enables adaptation of an agent to quickly learn to solve the new environment/task it is presented with. As depicted in Figure 13, it is expected that before an agent can solve a new task/environment, it needs to undergo an exploration stage to help identify and discover the strategy to use to solve the presented task/environment. This, most likely unsupervised, stage will require the knowledge of exploration meta-strategies such as novelty search, affordances or other methods that will enable the discovery of novel algorithms.

*Communication Stage*: At each step of the inner loop, experts can interact with each other by exchanging messages one or more times, until a predefined or learned condition is reached, e.g. an agreement among experts. The types of messages and the communication protocol are all learned and can vary greatly, depending on the learned expert policy and the context.

### Loss functions

There are different loss functions for each of the two training loops, i.e. the outer loop loss function and the inner loop loss function (one or many). The agent might receive the inner loop loss on the input inside the inner loop, in order to understand what has to be minimized during the inner loop. In fact, the inner loop loss need not even be a proper loss function per se, but could be any kind of structured feedback so long as it relates eventually to the outer loop performance. Examples of this can be a reward, a supervision signal, explicit gradients, future outcomes given proposed actions, or almost anything that is informative to the outer loop. The experts can just treat it as another informative input. The expert policy is trained by adjusting its parameters to minimize the outer loop loss function. The outer loop loss function is designed to reward rapid adaptation to new environments and rapidly learning to adapt to new environment/task families. The structure of the outer loop loss function gives rise to learned communication behavior in the inner loop of the training procedure. As mentioned in the previous section, the communication stage might also benefit from an explicit loss or objective function, either fixed or learned.

### On the difficulty of training learned learners

Due to the fact that the proposed 'Badger' architecture comprises of multiple loops of optimization, an inherent issue with systems of this types exists (Metz, Maheswaranathan, Nixon, Daniel Freeman, & Sohl-Dickstein, 2019). The inner loop, especially when containing many steps and, in addition, the communication stage upon which 'Badger' depends, result in many steps of optimization through which gradients or other relevant information for learning needs to propagate. To alleviate such problems, either advances in optimization are necessary (Beatson & Adams, 2019) or the use of optimization methods that do not suffer from such difficulties, such as evolutionary methods are necessary (Maheswaranathan, Metz, Tucker, Choi, & Sohl-Dickstein, 2019).

### Expert Uniqueness and Diversity

The fact that a single policy is used by all experts poses one clear challenge right from the start. The issue of diversity, or rather lack thereof, also sometimes called 'module collapse' (Shazeer, et al., 2017). Assuming that internal memory states of all experts are initialized identically and all experts receive the same input, then all experts would behave identically, hence no interesting behavior would ever emerge. For this reason, one important aspect of research is how to enforce diversity among experts during training. Some possible approaches that have already been tested by us include unique initial random internal states, ensuring different experts receive different input, explicit identifiers supplied on input to each expert, to explicitly force differentiation, or regularization. There are, however, other methods that warrant exploration in the future, e.g. (Cases, et al., 2019).

### Scalability and Growing

The modularity of 'Badger' and homogeneity of the expert policy should not only allow for better generalization (Chang, Gupta, Levine, & Griffiths, 2018; Rosenbaum, Cases, Riemer, & Klinger, 2019) but also for greater scalability. Irrespective of the number of experts, only one expert policy is trained. The architecture can grow without re-training. Adding an expert to an agent is performed trivially by simply copying or cloning an expert or instantiating a new expert.

Task-specific algorithms can emerge in expert's internal memories/states, as well as, as a result of the dynamics of the communication between the experts. Hence there is no need to change the meta-parameters, i.e. the model/policy weights (in standard neural networks, such change would invalidate the trained model). Adding more experts allows for greater computational and storage capacity and increased ability to learn more diverse set of learning algorithms.

An example learning procedure that shows the growing ability:
1. Train an agent via the outer loop
   a. i.e. learn an expert policy that is general across many environments (possibly via a curriculum)
2. Fix expert policy (weights cannot be changed anymore)
3. Run agent in a new environment
   a. Agent rapidly adapts to learning to solve tasks in new environment through inter-expert communication
   b. Emergence of task-specific algorithm/solution/policy in the communication dynamic of experts and in internal memory/states of experts within the agent
4. Add more experts to agent by cloning experts
   a. Feasible due to homogeneity of expert policy
   b. More computational / learning / adaptation capacity is obtained without re-training via the outer loop
5. Emergent algorithm present in expert's internal memory/states can benefit from additional experts by offloading learning/computation to added experts, agreed upon via communication

### Generality

Badger architecture's focus is on learning how to learn fast and on learning an expert policy that is general in the sense that it is applicable to as many different environments as possible.

Unlike a policy in reinforcement learning (Sutton & Andrew, 2018), an expert policy in Badger ought to be invariant to the task and environment at hand, more like a policy in meta-reinforcement learning (Schmidhuber J., 1995; Wang, et al., Learning to reinforcement learn, 2016; Duan, et al., RL2: Fast Reinforcement Learning via Slow Reinforcement Learning, 2017). An expert policy should encode a general communication strategy (a meta-strategy) that would allow decision- making sub-units (experts) to communicate with each other and collectively derive task-specific strategies, based on incoming observations. Such meta-strategy would allow generalization to classes of unseen problems rather than only to instances of unseen data from a single environment or task.

The characteristics of a Badger agent can then be shaped by exposing it to different environments:
- Environments can select for desired learning or adaptability traits or provide challenges of increasing difficulty (curriculum learning).
- An example of a desired learnable trait is gradual learning (need for growth of experts)
- Training can be focused by providing the simplest possible environment that selects for a desired capability (minimum viable environment).
- Experts in a Badger agent can also learn to perform automatically the division of labor, necessary to solve new tasks and automatic allocation (by themselves/or by others) to parts of the solution space that requires their attention or processing capacity

### Dimensions of Generalization

One of the primary goals of machine learning and artificial intelligence is the development of algorithms and associated models that have strong generalization capabilities. This means that when a system is trained on some data, it is able to transfer knowledge obtained during training to new and unseen observations during testing. Meta-learning takes this a step further and rather than only being able to generalize to new observations, it is able to transfer and exploit knowledge onto new, but related distributions of tasks.

We believe that our 'Badger' architecture takes generalization even further. It is not only concerned with being able to transfer knowledge to new observations, classes of tasks, but also to different types of learning problems.

Frequently, different types of learning are discussed in a way that invokes discreteness in the types of learning problems that exist. On the contrary, learning problems can be viewed as a spectrum or even a continuum, where discreteness and existing categorization is a concept frequently used to simplify dealing with a particular class of related problems.

We believe that 'Badger' will allow for generalization to new and unseen types of learning problems. For example, if we train our system on optimization problems, unsupervised and supervised learning tasks, 'Badger' will be able to generalize to bandit or even reinforcement learning types of problems, without encountering such problems during training.

We found for example that when we tried to train a Badger architecture on an identity function (that is, to output values provided on its inputs) in the presence of a hot/cold signal, it instead relied upon the hot/cold signal to learn a more general low dimensional convex function optimization strategy akin to triangulation.

### Recursive Self-improvement

We see a potential for recursive self-improvement (Schmidhuber J., 1987) in Badger-like agents, as follows: the ability of the Badger Architecture to derive new algorithms in expert's internal memories/states through communication between many decision-making sub-units could allow for the possibility of more feasible recursive self-improvement compared to other forms of meta-learning.

In addition, growing and scalability might provide an additional dimension along which an agent can adapt and improve, which is traditionally not possible in other architectures.

Specially crafted loss functions used during the two-stage training procedure specifically pressure the creation of an expert policy that might possess the necessary traits of recursive self-improvement (e.g. when experts self-organize for faster adaptation of the adaptation procedures themselves).

### Minimum Viable Environments, Autocurricula and Self-Play

Until now, we haven't described what kind of tasks are needed to guide the learning during the outer loop to learn a general enough expert policy.

We are proposing to create a minimum viable environment (MVE), which can be handcrafted, or with characteristics of autocurricula/self-play (Leibo, Hughes, Lanctot, & Graepel, 2019), but whose properties and agent evaluation criteria, will promote learning of an expert policy that becomes increasingly more general.

### Why an MVE?

Training an agent in the real world, or close to a real-world environment would be wasteful and most likely, not feasible. Instead, only minimal requirements, that can then generalize to human real-world environment, should be necessary and therefore implemented.

The motivation for an MVE is the observation that human intelligence is able to solve a wide array of problems which were not present under the conditions in which it evolved. Therefore in some sense, the environment necessary for evolution to discover very general methods of learning did not need to encompass nearly as high a degree of complexity as the resulting methods were able to ultimately deal with.

### What do we believe were the basic requirements?

Humans had to imagine things that didn't exist. Humans had to communicate in large groups, negotiate, have empathy, and so on. Human hand has five fingers and an opposable thumb, with enough dexterity that allowed the creation of tools (Perez, 2018). On top of this, sexual selection (Darwin & Wallace, 1858; Miller, 2000) also guided the process, not just "survival of the fittest". All this enabled the evolution of the current human intelligence that can be used to solve tasks that were not present in the original MVE (e.g. programming, directing a movie, discovering science)

*In other words, an MVE should be as simple as possible, while allowing the evolution*/*learning of human level intelligence and generality, but not simpler.*

An MVE should evaluate agent on its ability to adapt fast and efficiently. **Importantly**, an MVE should evaluate not only the agent's behavior and performance but also its internals (via white-box testing). For example, how are experts interacting, growing, the patterns of their communication, etc. Only observing their behavior externally wouldn't be sufficient.

### Experimental Results

In trying to approach a general agent, we need a system which can generalize not just to different distributions of inputs and outputs or to different tasks, but to cases in which the inputs and outputs differ in format and in number. One stage of this would be to say that an agent trained on *Nin* inputs and *Nout* outputs should be able to generalize to *Nin* inputs and *Nout* outputs without re-training, where N and *M* can be different. A more severe requirement would be that an agent trained on image data should generalize to problems involving sound data or tabular data without re-training.

We demonstrate that by structuring a network as a collection of experts with identical policies (internal weights), it is possible to train a method for function optimization that generalizes to different numbers of dimensions. This is done by allowing each expert to essentially address and 'push' values to different output dimensions by way of an attention mechanism (Vaswani, et al., 2017) between the experts and a set of addresses associated with the different outputs. This way, if the number of outputs is changed, it simply means that there are more keys to which information can be pushed.

Using this sort of dynamically allocated key space can pose significant training difficulties, as initial policies tend to address all outputs simultaneously (as such, early local optima seen in training correspond to pushing the same value out on each output direction). However, longer training periods and training on a controlled curriculum of tasks can sometimes escape this local optimum of strategy and discover more general ways to search for the function optimum. In this case, we observe that the policy - if trained on both a small and large number of dimensions, can generalize to intermediate and unseen dimension counts, shown in Figure 15. However, at the current stage it cannot yet extrapolate to a larger number of dimensions than it has seen during training.

### Experiment - Guessing Game

In this experiment we are interested in analyzing how an expert policy can be found that allows an agent to learn to adapt based on an error signal provided on its input. The agent is provided with a predefined or variable number of inputs and outputs and an error signal that evaluates how closely the agent's outputs match the desired targets. This data is provided to the agent at every step of the inner loop. At a high level, one can imagine this task as "Guess X numbers" with feedback or as a learned optimization procedure.

Figures 14, 15 and 17 show results on this task under various hypotheses and with different learning objectives to show different unique aspects of the Badger architecture. In Figure 14, the expert policy is trained to foster communication and to produce a target at the last step of the inner loop. In Figure 15 the agent is tested on varying the number of dimensions of the optimization problem from the number of dimensions on which it was trained. In Figure 17, the conditions are similar to the experiment shown in Figure 14, but here the agent is trained to converge on the desired target as fast as possible, rather than on the last step of the inner loop.

In addition to the shown results, we also observe that on tasks of this nature, increasing the number of experts can make training easier. In a related task, we observe that asymptotic performance actually scales with the number of experts even as the number of experts becomes larger than seen during training. This suggests that this approach may benefit from the sort of scalability that we mentioned in the motivations.

### Comparison to Related Work

In the following section, we will outline the main differences between our 'Badger' approach and related work or areas of research that might evoke similarities.

### Artificial Neural Networks (ANN)

There are many differences between Badger and ANNs, both conceptually and technically. The comparison here is primarily for completeness.

ANNs:
- Inputs have fixed interpretation/function after training
- Number of input/output channels is constant and cannot vary between tasks
- Static architecture
- Learning occurs between nodes (edges are learned)

Badger:
- Roles of experts assigned dynamically at inference time
- Generalizes to different numbers and types of inputs/outputs (e.g. train on a 3-dimensional task, test on a 5-dimensional version)
- Can be trained to handle variations in architecture over batches or even during inference.
- Learning is entirely contained on each node (inner loop state updates, outer loop internal policy updates)
- Architecture can scale dynamically allowing for more computational capacity and power

### Meta-Learning and Learning to Learn

"Learning to learn", or the ability to use past experience to facilitate further learning, has been observed in humans and other primates (Harlow, 1949). Known in machine learning as meta-learning (Schaul and Schmidhuber, 2010; Schmidhuber, 1996; Thrun and Pratt, 1998; Botvinick et al., 2019), the topic has recently attracted increasing interest (e.g., Andrychowicz et al., 2016; Finn et al., 2017). A variety of approaches have been proposed, mainly gradient-based ones where task adaptation is accomplished using gradient methods (Andrychowicz et al., 2016; Finn et al., 2017; Li and Malik, 2017, Wichrowska et al., 2017) and memory-based ones where a learning procedure is acquired by for example a recurrent neural network (Ortega et al., 2019; Santoro et al., 2016; Wang et al., 2016; Duan et al., 2016; Denil et al., 2016; Mishra et al., 2018). Badger is an example of the latter class of architectures, with additional requirements regarding multi-agent cooperation, communication and extensibility.

### Modular Meta-Learning

Meta-learning has also been extended to the modular setting, where different modules are used for specialization and diversification. Unlike in Badger, however, most works are limited to supervised learning and having different policies for each module (Alet, Lozano-Perez, & Kaelbling, Modular meta-learning, 2018; Alet, Bauza, Rodriguez, Lozano-Perez, & Kaelbling, 2018; Alet, Schneider, Lozano-Perez, & Kaelbling, 2019; Battaglia, et al., 2018).

### Multi-Agent Reinforcement Learning

The field of Multi-Agent Reinforcement Learning (MARL) deals with Reinforcement Learning problems where more than a single agent is active in an environment. Thorough recent reviews of this area can be found in (Hernandez-Leal, Kartal, & Taylor, 2018).
- Badger experts are inside the agent, and they can interact with the environment only via an intermediary (membrane)
- Badger puts more emphasis on expert-to-expert communication (channels, topology, language), whereas in MARL, communication and language is optional (actions may be sufficient)
- All Badger experts aim to maximize a shared goal (agent's goal), whereas in MARL, shared goal for agents is optional
- All experts have the same expert policy, whereas in MARL this is optional
- Expert dynamics need not be driven by a reward function, but could learn to make use of other forms of feedback.

### MARL & Emergent Communication

This sub-area of MARL focuses on how multiple agents can learn to communicate among themselves in order to better solve problems, or solve tasks that cannot be solved individually.

While early papers focused purely on benefits of explicit communication between agents (Sukhbaatar, Szlam, & Fergus, 2016), more recent work focuses on specific properties of the communication/language that might be beneficial for some purposes. Examples of these properties can be e.g. interpretability of language (Mordatch & Abbeel), or scalability of communication via local interactions (Jiang & Lu, 2018) or targeted communication (Das, et al., 2018).

Other important difference between these works is also in the assumption about the communication channel. While some works use differentiable communication channels, others focus on the more difficult non-differentiable communication scenario (i.e. communication through the environment) (Lowe, et al., 2017).

Relevant requirements for the Badger architecture are mostly in shared policies, scalability of the communication (therefore decentralized and local properties) and the focus on meta-learning. (Jiang & Lu, 2018) share some of concepts with Badger, however, our focus is on fast adaptation in the meta-learning setting, which is not common in the MARL field.

### Multi-Agent Meta-Reinforcement Learning

Existing work on MARL doesn't yet focus on meta-learning. One exception is the work (Kirsch, van Steenkiste, & Schmidhuber, 2019), which considers multiple agents, to learn a more universal loss function across multiple environments, where each agent is placed in a different environment. Compared to Badger, this work uses a standard MARL setting, where multiple agents are placed in an environment, rather than inside an agent. The agents also don't communicate.

### Neural Architecture Search

This field is concerned with finding the optimal or better fixed topologies than designed by hand. Example works include (Cases, et al., 2019; Castillo-Bolado, Guerra-Artal, & Hernandez-Tejera) for dynamic topologies.
- Badger is not only concerned with finding a single topology, but rather with learning to dynamically evolve the topology of experts to facilitate fast adaptation to learning to solve new and unseen tasks
- Badger is a more universal decision-making system that contains aspects of neural architecture search

### Further Notes

Q: Why to have only one expert policy? (Or a very few, but less than the number of experts)?

A: By constraining the system to have only one shared policy used by all experts, we are pushing the learning system during the outer loop to discover a universal communication / coordination expert policy. It should contain as little task-specific elements as possible, because the capacity of one expert is not sufficient to encode all tasks. Furthermore, this constraint pushes the learning of task specific policies to be a result of interaction among experts during the inner loop. In other words, we want to force the learning system to discover the task policies as part of the inner loop, not as part of the outer loop. On the other hand, if we allowed each expert to have its own unique policy (number of expert policies would be equal to number of experts), the learning during the outer loop would most likely distribute the task policies into the expert policies, because the capacity of this network of networks would have enough capacity to store task specific policies in it.

Q: What about hierarchical structures? Aren't we ignoring them?

No. Even though these are not explicitly there, they can emerge in the internal dynamics of the experts communicating with each other.

### SUMMARY

An architecture and a learning procedure where:
- An agent is made up of many experts
- All experts share the same communication policy (expert policy), but have different internal memory states
- There are two levels of learning, an inner loop (with a communication stage) and an outer loop
- Inner loop - Agent's behavior and adaptation emerges as a result of experts communicating between each other. Experts send messages (of any complexity) to each other and update their internal memories/states based on observations/messages and their internal state from the previous time-step. Expert policy is fixed and does not change during the inner loop.
- Outer loop - An expert policy is discovered over generations of agents, ensuring that strategies that find solutions to problems in diverse environments can quickly emerge in the inner loop.
- Agent's objective is to adapt fast to novel tasks

Exhibiting the following novel properties:
- **Roles** of experts and **connectivity** among them assigned **dynamically** at inference time
- Learned communication protocol with **context dependent messages** of varied complexity
- **Generalizes** to different numbers and types of inputs/outputs
- Can be trained to handle **variations in architecture** during both training and testing

### GLOSSARY

**Agent** - A decision-making unit interfacing with the world/environment. Comprises of *multiple experts.*
**Outer Loop** - The search for the expert policy. Represents *generations* of agent's behavior over which the expert policy is discovered/learned. Agent is trained over multiple environments/tasks. The expert policy is learned by *adjusting the weights* of a model (e.g. a neural network) that represents the expert policy.
**Expert** - A decision-making sub-unit of an agent. Comprises of an *expert policy* (same across all experts) and an *internal memory*/*state* (unique to each expert). Collectively, via communication, experts give rise to learning algorithms.
**Inner Loop** - Behavior of an agent during its *lifetime.* Parameters of the model representing the expert policy are *fixed* and are not changed during the inner loop. Each inner loop step involves a communication stage.
**Expert Policy** - a function defining a strategy for *communicating among experts* within an agent. *Same* for all experts within an agent. Functionally it captures the notion of *'how can experts coordinate together to learn to solve a new task*/*environment as fast as possible*'.
**Communication** - At each step of the inner loop, experts can *send messages* to each other and *update their internal memories*/*states* based on observations/messages and their internal state from the previous time-step. The exchange of messages can happen more than once per inner loop step.

## Claims

1. A modular Artificial Intelligence, AI, processing system, comprising:
an input module configured to receive input data;
an output module configured to output data processed by the system;
a first agent module operatively connected to the input module and to the output module, the first agent module being configured in use to process the input data and to generate the output data for the output module, and comprising two or more first sub-agent modules, each sub-agent module comprising an internal memory state and being operatively connected via a communication channel to at least one other sub-agent module within the first agent;
each first sub-agent module being configured with a communication algorithm, the communication algorithm defining how the sub-agent module communicates with other sub-agent modules to enable the first agent module to process the input data, and in use at least one of the two or more first sub-agent modules is configured to process the input data in dependence on its internal memory state; and
a sub-agent spawning module configured in use to generate a new sub-agent module, to increase a first performance metric of the system.

2. The AI processing system of claim 1, wherein the sub-agent spawning module is further configured in use to:
receive the output data;
determine, using the output data, if a first threshold condition associated with the first performance metric of the system, is satisfied; and
generate the new sub-agent module if the first condition is not satisfied, the new sub-agent module being comprised in the first agent module, to increase the first performance metric of the system.

3. The AI processing system of claim 1 or 2, wherein each first sub-agent module is configured with a shared communication algorithm, and the sub-agent spawning module is configured in use to generate the new sub-agent module comprising the shared communication algorithm by replicating an existing one of the first sub-agent modules.

4. The AI processing system of claim 3, wherein the input data comprises a plurality of component data, the internal memory state of each one of the two or more first sub-agent modules is configured to be dependent on data processed by the associated first sub-agent module, and the two or more first sub-agent modules are configured to process different component data, such that each one of the at least two or more first-sub-agent modules comprises a unique internal memory state; and optionally
wherein the processing characteristics of each one of the at least two or more first sub-agent modules are dependent on the unique internal memory state of each associated first sub-agent module.

5. The AI processing system of claim 1 or 2, wherein at least some of the first sub-agent modules are configured with a different communication algorithm, and the number of different communication algorithms is less than the number of first sub-agent modules, and the processing characteristics of each first sub-agent module is dependent on the associated communication algorithm.

6. The AI processing system of any preceding claim, wherein the two or more first sub-agent modules are configured to form a network of sub-agent modules, wherein the two or more first sub-agent modules are configured in operative communication, and the two or more networked first sub-agent modules are configured in use to iteratively process the input data, by exchanging data until a second threshold condition is achieved;
wherein the internal memory state of at least one of the first sub-agent modules comprised in the network of sub-agent modules is configured to change as the input data is processed;
the network of sub-agent modules is configured to generate the output data in dependence on the second threshold condition being achieved; and optionally
the second threshold condition comprises a predetermined number of processing iterations being completed.

7. The AI processing system of any preceding claim, comprising a sub-agent verification module operatively connected to the input module and to the output module, configured in use to analyse the generated output data and to determine if the generated output data satisfies a third threshold condition, and in dependence on the output data not satisfying the third threshold condition, instructing the first agent module to iteratively process the input data until the generated output data satisfies the third threshold condition; and optionally
the third threshold condition is associated with an expected output data, and the sub-agent verification module is configured to determine if the generated output data is at or within a predetermined proximity of the expected output data.

8. The AI processing system of claim 6 or 7, wherein at least one of the first sub-agent modules is configured in use to vary, during the iterative processing of the input data, any one or more of:
a) an internal memory state of the at least one first sub-agent module;
b) a communication channel operatively connecting the at least one first sub-agent module to another first sub-agent module; or
c) data shared across the communication channel operatively connecting the at least one first sub-agent module to another first sub-agent module.

9. The AI processing system of any preceding claim, comprising:
an agent spawning module configured in use to generate a second agent module in operative communication with the first agent module, the second agent module comprising two or more second sub-agent modules, and wherein the agent spawning module is configured to:
receive the output data;
determine, using the output data, if a fourth threshold condition associated with a desired performance metric of the system is satisfied; and
generate the second agent module if the fourth threshold condition is not satisfied, to increase the desired performance metric of the system; and optionally
wherein the agent spawning module is configured in use to generate the two or more second sub-agent modules comprised in the second agent by replicating at least one of the two or more first sub-agent modules.

10. The AI processing system of any preceding claim, wherein at least one of the first sub-agent modules comprises a neural network comprising a variable memory state, wherein the data processing characteristics of the neural network are dependent on the variable memory state; and optionally the neural network is any one of a recurrent neural network, or an Elman recurrent neural network.

11. The AI processing system of any preceding claim, wherein at least two of the first sub-agent modules are configured with different initial internal memory states.

12. The AI processing system of any preceding claim, wherein the first performance metric of the system comprises any one or more of:
a) a speed with which the output data is generated;
b) a volume of input data that the AI processing system is capable of processing in a unit time period;
c) an accuracy of the generated output data relative to a desired output;
d)) a convergence of the generated output to a desired output;
e) a computational capacity of the system; or
f) an available memory of the system.

13. A method of training an Artificial Intelligence, AI, processing system to learn an improved communication algorithm to learn how to solve one or more tasks, the AI processing system comprising at least one first agent module operatively connected to an input module for receiving input data, and to an output module configured to output data processed by the system, the at least one first agent module comprising two or more first sub-agent modules, each first sub-agent module being operatively connected to at least one other first sub-agent module within the first agent module, each sub-agent module being configured to execute a communication algorithm defining how each sub-agent module communicates with other sub-agent modules comprised within the at least one first agent module, when processing input data associated with the one or more tasks, the method comprising the steps of:
receiving by the input module, input data associated with the one or more tasks that the AI processing system is learning to solve;
iteratively processing, by the two or more first sub-agent modules, during a first iterative process, the input data in accordance with the communication algorithm and generating during each iteration output data;
analysing the output data generated during each iteration of the first iterative process and providing to the first agent module, a structured feedback dependent on the output data generated during each iteration, the structured feedback comprising information enabling at least one parameter associated with at least one sub-agent module to be modified during subsequent iterations of the first iterative process;
repeating the first iterative process until a first threshold condition is achieved;
determining if the communication algorithm satisfies a second threshold condition;
modifying the communication algorithm executed by each sub-agent module if the second threshold condition is not satisfied; and
iteratively repeating the method steps until the communication algorithm satisfies the second threshold condition.

14. The method of claim 13, wherein the first threshold condition comprises a convergence condition indicative of whether an output of the two or more first sub-agent modules converges to a solution, and the step of iteratively processing, by the two or more first sub-agent modules, during the first iterative process, comprises:
exchanging data processed by the two or more first sub-agent modules until a convergence in the output generated by the two or more first sub-agent modules in subsequent processing iterations of the first iterative process is observed; and wherein
an internal memory state of at least one of the two or more first sub-agent modules changes with respect to the memory state of the at least one first sub-agent module during a preceding processing iteration, as the input data is processed by the two or more first sub-agent modules, the preceding processing iteration being comprised in the first iterative process.

15. The method of claim 13 or 14, wherein the method further comprises:
using the structured feedback to modify at least one parameter of at least one of the two or more sub-agent modules with respect to a preceding iteration of the first iterative process; and optionally
modifying the at least one parameter causes a modification of any one or more of:
a) an internal memory state of at least one of the two or more first sub-agent modules;
b) a communication channel operatively connecting the two or more first sub-agent modules; or
c) data shared across a communication channel operatively connecting the two or more first sub-agent modules.

16. The method of any one of claims 13 to 15, wherein the second threshold condition comprises any one or more of:
a) a predetermined time period taken by the two or more first sub-agent modules to generate output data that solves the one or more tasks, and the step of determining if the communication algorithm satisfies the second threshold condition comprises:
determining if the time taken by the two or more first sub-agent modules to generate the output data that solves the one or more tasks is less than or equal to the predetermined time period;
b) a convergence to a common solution in the output generated by the at least one first agent module over subsequent iterations of the method, and the step of determining if the communication algorithm satisfies the second threshold condition comprises:
determining if the output data generated by the at least one first agent module over subsequent iterations of the method is converging to the common solution;
c) a convergence to an expected solution in the output generated by the at least one first agent module over subsequent iterations of the method, and the step of determining if the communication algorithm satisfies the second threshold condition comprises:
determining if the output generated by the at least one first agent module over subsequent iterations of the method is converging to the expected solution; or
d) a speed with which the output generated over subsequent iterations of the method converges, and the step of determining if the communication algorithm satisfies the second threshold condition comprises:
determining if the output generated by the at least one first agent module over subsequent iterations of the method is converging.

17. The method of any one of claims 13 to 16, wherein the communication algorithm comprises at least one variable parameter and modifying the communication algorithm executed by each sub-agent module if the second threshold condition is not satisfied, comprises:
varying a value of the at least one variable parameter using any one or more of a stochastic gradient descent, an evolutionary method, or an iterative optimization method.

18. The method of any one of claims 13 to 17, further comprising:
determining, using the output data, if a third threshold condition associated with a desired performance metric of the system is satisfied;
generating a new sub-agent module if the third threshold condition is not satisfied; and optionally
the desired performance metric comprises any one or more of:
a) a speed with which the output data is generated;
b) a volume of input data that the AI processing system is capable of processing in a unit time period;
c) an accuracy of the generated output relative to a desired output;
d) a convergence of the generated output to a desired output;
e) a computational capacity of the AI processing system; or
f) an available memory of the AI processing system.

19. A computer program product comprising instructions which, when the program is executed by one or more computer processors, cause the one or more processors to carry out the method of any one of claims 13 to 18.
